(19) Europäisches Patentamt
European Patent Office
Office européen des brevets

(11) EP 4 607 643 A1

(12) **EUROPEAN PATENT APPLICATION**
published in accordance with Art. 153(4) EPC

(43) Date of publication:
**27.08.2025 Bulletin 2025/35**

(21) Application number: **23885880.7**

(22) Date of filing: **02.11.2023**

(51) International Patent Classification (IPC):
***H01M 10/0565*** *(2010.01)* ***H01M 4/36*** *(2006.01)*
***H01M 4/38*** *(2006.01)* ***H01M 4/48*** *(2010.01)*
***H01M 4/485*** *(2010.01)* ***H01M 4/525*** *(2010.01)*
***H01M 4/587*** *(2010.01)* ***H01M 6/18*** *(2006.01)*
***H01M 10/0568*** *(2010.01)* ***H01M 10/0585*** *(2010.01)*
***H01M 50/44*** *(2021.01)* ***H01M 50/414*** *(2021.01)*
***H01M 50/429*** *(2021.01)* ***H01M 50/437*** *(2021.01)*

(52) Cooperative Patent Classification (CPC):
**H01M 4/36; H01M 4/38; H01M 4/48; H01M 4/485; H01M 4/525; H01M 4/587; H01M 6/18; H01M 10/0565; H01M 10/0568; H01M 10/0585; H01M 50/414; H01M 50/429; H01M 50/437; H01M 50/44;** Y02E 60/10

(86) International application number:
**PCT/JP2023/039724**

(87) International publication number:
**WO 2024/096126 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 JP 2022177563**

(71) Applicant: **Sumitomo Chemical Company, Limited**
**Tokyo 103-6020 (JP)**

(72) Inventors:
- **SUWA Koki**
  **Niihama-shi, Ehime 792-8521 (JP)**
- **NAKAJIMA Hideto**
  **Niihama-shi, Ehime 792-8521 (JP)**

(74) Representative: **Vossius & Partner Patentanwälte Rechtsanwälte mbB**
**Siebertstrasse 3**
**81675 München (DE)**

(54) **BATTERY**

(57) Provided is a battery including a positive electrode layer, a negative electrode layer, and an electrolyte layer disposed between the positive electrode layer and the negative electrode layer, in which the electrolyte layer contains a polymer having an ability to preferentially conduct metal ions, and a thickness ratio between the positive electrode layer and the electrolyte layer is 10:1 to 0.5:1.

EP 4 607 643 A1

*Fig.1*

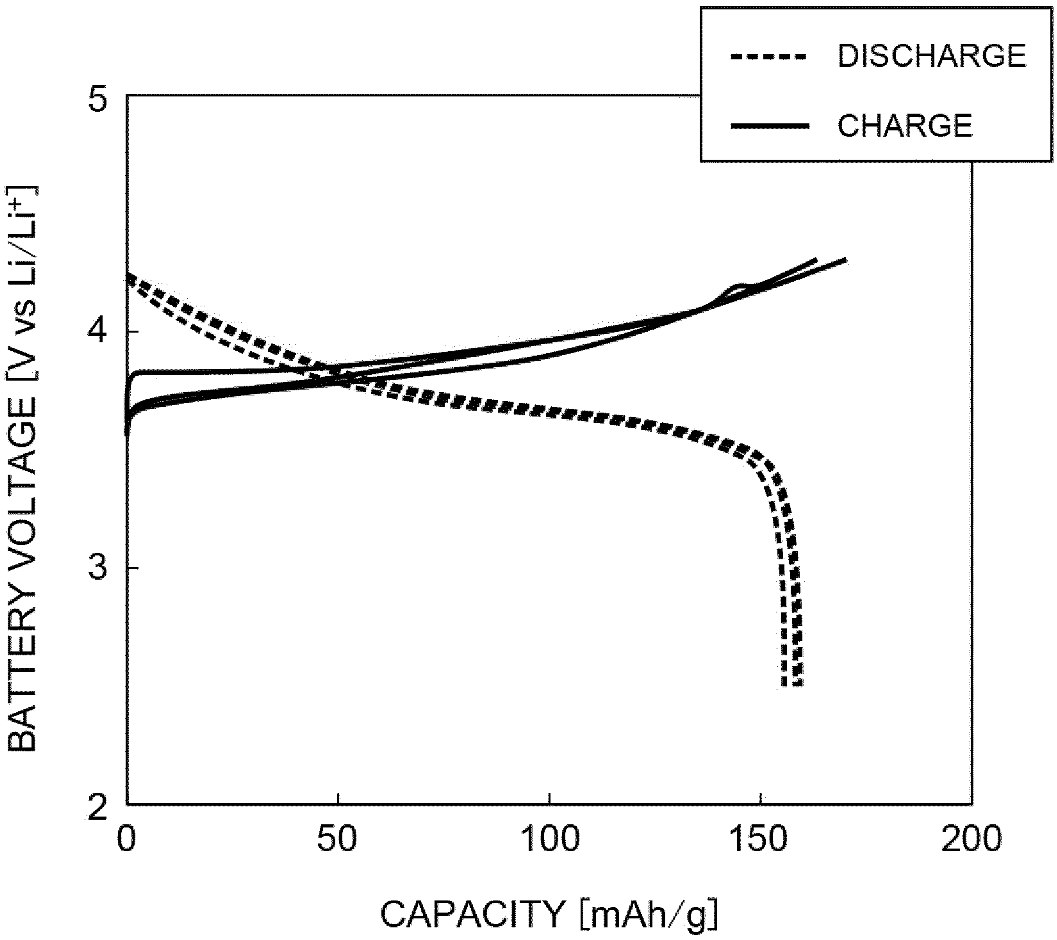
DISCHARGE
CHARGE
BATTERY VOLTAGE [V vs Li/Li+]
CAPACITY [mAh/g]
5
4
3
2
0
50
100
150
200

## Description

### Technical Field

The present disclosure relates to a battery.

### Background Art

Batteries such as lithium ion batteries that perform charge and discharge in accordance with movement of metal ions between a positive electrode and a negative electrode are actively studied because of their high capacity. As electrolytes for lithium ion batteries or the like, solutions of lithium salts containing organic solvents or ionic liquids are known. However, solid electrolytes or polymer electrolytes have been studied from the viewpoint of safety and processability (Patent Literature 1 to 3).

### Citation List

### Patent Literature

Patent Literature 1: Chinese Patent Application Laid-Open Publication No. 110247111

Patent Literature 2: Korean Patent Application Laid-Open Publication No. 10-2094466

Patent Literature 3: Chinese Patent Application Laid-Open Publication No. 112397762

### Summary of Invention

### Technical Problem

However, there is still room for improvement in cycle characteristics of solid-state batteries using polymer electrolytes.
The present disclosure has been made in view of the above problems, and an object thereof is to provide a battery having excellent cycle characteristics.

### Solution to Problem

The present disclosure includes the following embodiments [1] to [8].

[1] A battery including a positive electrode layer, a negative electrode layer, and an electrolyte layer disposed between the positive electrode layer and the negative electrode layer, in which

the electrolyte layer contains a polymer having an ability to preferentially conduct metal ions, and
a thickness ratio between the positive electrode layer and the electrolyte layer is 10:1 to 0.5:1.

[2] A battery including

a positive electrode layer, a negative electrode layer, and an electrolyte layer, in which
the electrolyte layer contains a polymer having an ability to preferentially conduct metal ions, and
a thickness ratio between the negative electrode layer and the electrolyte layer is 5:1 to 0.5:1.

[3] The battery according to [1] or [2], in which the polymer contains at least one of an anionic functional group having an alkali metal ion as a counter cation and a functional group having an anion scavenging ability.
[4] The battery according to any one of Claims [1] to [3], in which the positive electrode layer contains a lithium composite oxide containing nickel as a positive electrode active material.
[5] The battery according to any one of [1] to [4], in which the negative electrode layer contains, as a negative electrode active material, at least one selected from the group consisting of an oxide containing titanium, an active material containing silicon, and a carbon material.

[6] The battery according to any one of [1] to [5], in which the electrolyte layer contains an ionic liquid.
[7] The battery according to any one of [1] to [6], in which a peel strength between the positive electrode layer and the electrolyte layer is 1 N/m or more.
[8] The battery according to any one of [1] to [7], in which a peel strength between the negative electrode layer and the electrolyte layer is 1 N/m or more.
[9] A composite membrane including: a fiber substrate or a porous substrate; and a polymer having an ability to preferentially conduct metal ions.

**Advantageous Effects of Invention**

According to the present disclosure, a battery having excellent cycle characteristics can be provided.

**Brief Description of Drawings**

FIG. 1 is a diagram showing a result of a charge-discharge test performed on a half cell according to Example 1.
FIG. 2 is a diagram showing a result of a charge-discharge test performed on a half cell according to Example 2.
FIG. 3 is a diagram showing a result of a charge-discharge test performed on a half cell according to Comparative Example 1.
FIG. 4 is a diagram showing results of a charge-discharge test of a full cell.
FIG. 5 is a diagram showing results of a charge-discharge test performed on a half cell according to Example 3.

**Description of Embodiments**

A battery according to the present embodiment includes a positive electrode layer, a negative electrode layer, and an electrolyte layer, the electrolyte layer contains a polymer having an ability to preferentially conduct metal ions, and at least one of the following (1) and (2) is satisfied.

(1) The ratio of the thickness of the positive electrode layer to the thickness of the electrolyte layer ((thickness of positive electrode layer):(thickness of electrolyte layer)) is 10:1 to 0.5:1.
(2) The ratio of the thickness of the negative electrode layer to the thickness of the electrolyte layer ((thickness of negative electrode layer):(thickness of electrolyte layer)) is 5:1 to 0.5:1.

Regarding (1), the thickness ratio may be 5:1 to 0.5:1, 3:1 to 0.5:1, or 1:1 to 0.6:1. The thickness of the positive electrode layer may be 1 to 500 μm, 1 to 200 μm, 10 to 150 μm, or 20 to 100 μm. The thickness of the negative electrode layer may be 1 to 500 μm, 1 to 200 μm, 10 to 150 μm, or 20 to 100 μm.
Regarding (2), the thickness ratio may be 3:1 to 0.5:1 or 1:1 to 0.6:1.
The electrolyte layer may be formed from an electrolyte composition. The electrolyte layer and the electrolyte composition may include a solid electrolyte material together with a polymer having an ability to preferentially conduct metal ions.
The thickness of the electrolyte layer may be 1 to 200 μm, 10 to 150 μm, or 20 to 100 μm.

[Polymer Having Ability to Preferentially Conduct Metal Ions]

As the polymer (hereinafter also simply referred to as a polymer) having the ability to preferentially conduct metal ions, for example, when a transference number of metal ions is measured for at least one of the following compositions (A) and (B) at room temperature (25°C), the transference number of metal ions may be 0.45 or more, 0.5 or more, 0.6 or more, or 0.7 or more.

(A) A composition containing 17% by mass of the polymer, 17% by mass of polyvinylidene fluoride (PVDF), and 66% by mass of a nonionic plasticizer.
(B) A composition containing 31.9% by mass of the polymer and the remaining total amount of a metal salt and a nonionic plasticizer, and having a metal ion concentration of 0.3 mol/L.

When the polymer contains an anionic functional group, the metal ion contained in the composition may be a counter cation of the anionic functional group, or may be added as a metal salt. The polymer having the ability to preferentially conduct metal ions may be a polymer having an ability to preferentially conduct alkali metal ions. Examples of

the nonionic plasticizer include an organic solvent in the composition (A), and at least one of an organic solvent and another resin such as a fluorine-based resin in the composition (B). The organic solvent may be an aprotic solvent. The aprotic solvent may be at least one selected from the group consisting of a carbonate-based solvent, a fluorine-based solvent, and an ether-based solvent. The fluorine-based resin is preferably a resin having a carbon chain as a main chain. The carbon chain may be formed by radical polymerization of an ethylenically unsaturated group.

Examples of the carbonate-based solvent include linear carbonates such as dimethyl carbonate, diethyl carbonate, and ethyl methyl carbonate; and cyclic carbonates such as ethylene carbonate, propylene carbonate, butylene carbonate, and vinylene carbonate. Examples of the ether-based solvent include cyclic ethers such as tetrahydrofuran, 2-methyltetrahydrofuran, tetrahydropyran, and 1,3-dioxolane; and linear ethers such as 1,2-diethoxyethane and ethoxymethoxyethane. Examples of the fluorine-based solvent include hydrofluorocarbons such as perfluorooctane; hydrofluoroethers such as methyl nonafluorobutyl ether and ethyl nonafluorobutyl ether; and hydrofluoroolefins such as 1,3,3,3-tetrafluoropropene. In addition, examples of the solvent include dimethyl sulfoxide (DMSO); and aprotic solvents such as amide-based solvents such as dimethylformamide (DMF) and dimethylacetamide (DMA). The organic solvents may be used alone or as a mixed solvent including two or more organic solvents. The organic solvent may be a mixed solvent of ethylene carbonate:propylene carbonate = 1:1 (volume ratio).

A concentration of the metal ions in the composition may be prepared by adding a metal salt. For example, when the metal salt is an alkali metal salt, the alkali metal salt is not particularly limited, and examples thereof include MF, MCl, MBr, MI, $MClO_4$, $MPF_6$, $MBF_4$, $M_2SO_4$, $M[(C_hF_{2h+1})SO_3]$ (h is 0 to 3), and $M[(C_hF_{2h+1})SO_2]_2N$ (h is 0 to 3), where M is the alkali metal. When the polymer contains a structural unit (A) to be described later, M may be the same alkali metal element as the alkali metal element of the structural unit (A).

Examples of the polymer having the ability to preferentially conduct metal ions include a polymer containing at least one of an anionic functional group having an alkali metal ion as a counter cation (also referred to as a functional group (A)) and a functional group having an anion scavenging ability (also referred to as a functional group (B)). A structure of the polymer is not particularly limited, and examples thereof include a structure having a carbon chain as a main chain, and the carbon chain may be formed by radical addition polymerization of a monomer having an ethylenically unsaturated group.

Examples of the alkali metal ion, which is a counter cation of the functional group (A), include a lithium ion, a sodium ion, a potassium ion, a rubidium ion, and a cesium ion, and the alkali metal ion may be a lithium ion, a sodium ion, or a potassium ion, may be a lithium ion or a sodium ion, or may be a lithium ion. Hereinafter, a structural unit containing the functional group (A) and the metal ion that is a counter cation of the functional group (A) is also referred to as a structural unit (A). The structural unit (A) may have a structure obtained by radical addition polymerization of a monomer having an ethylenically unsaturated group. The alkali metal ion, which is a counter cation of the functional group (A), may contain the same alkali metal ion as the alkali metal ion contained in the positive electrode active material.

The structural unit (A) may have, as the functional group (A), at least one selected from the group consisting of a conjugated anion of a sulfonylimide group, a conjugated anion of a sulfonic acid group, conjugated anion of a carboxylic acid group, and a conjugated anion of a phenolic hydroxyl group. The conjugated anion of the sulfonylimide group, the conjugated anion of the sulfonate group, and the conjugated anion of the phenolic hydroxyl group may be contained in, for example, a group having a conjugated anion of the sulfonylimide group, a group having a conjugated anion of the sulfonic acid group (sulfonate group), and a group having a conjugated anion of the phenolic hydroxyl group, which will be described below.

When the functional group (A) is a group having a conjugated anion of a sulfonylimide group, the structural unit (A) may be a structural unit represented by the following Formula (A1).

[Chem. 1]

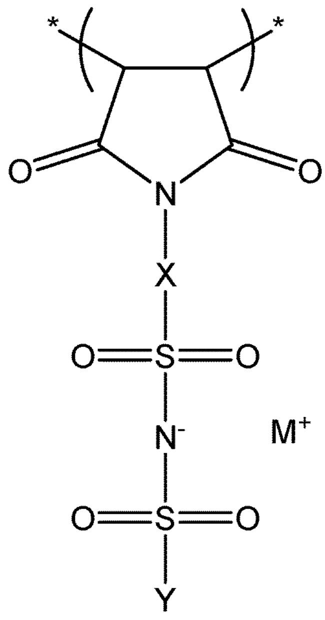

(A1)

(In Formula (A1), X represents a divalent organic group having 1 to 20 carbon atoms, Y represents a halogen atom or a monovalent organic group having 1 to 20 carbon atoms, $M^+$ represents an alkali metal ion, and * represents a position at which the structural unit (A1) is bonded to another structural unit).

X is not particularly limited, and may be a hydrocarbon group, a group having a hetero atom, or a heterocyclic ring. More specific examples of X include a divalent group such as a hydrocarbon group and a group having a chemical structure in which one or more carbon atoms (methylene groups) in the hydrocarbon group are substituted with a linking group of -O-, -S-, -C(=O)-, or -C(=O)O-. Note that, when there are a plurality of linking groups, the linking groups are not adjacent to each other. In addition, the divalent group may have a substituent that substitutes a hydrogen atom bonded to a carbon atom. The substituent may be a monovalent substituent, and examples thereof include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. X may be bonded to one or both of a nitrogen atom of a maleimide group and a sulfur atom of a sulfonyl group by a carbon atom of X.

The number of carbon atoms of X may be 1 to 15, 2 to 10, or 3 to 8. X may be a group having an aromatic ring, or may be a group having an aromatic carbocyclic ring such as a benzene ring. A substituent such as an alkyl group, a halogen atom, or an electron-withdrawing group may be bonded to a carbon atom which is a ring member of the carbocyclic ring. The hydrocarbon group as X is preferably a phenylene group, an alkylene group having 1 to 8 carbon atoms, a polyoxyalkylene group, or a group in which some or all of hydrogen atoms bonded to carbon atoms of these groups are substituted with a halogen atom such as a fluorine atom, and more preferably a phenylene group, an alkyl group, or a substituted phenylene group substituted with a halogen atom, an electron-withdrawing group, or the like. Examples of the electron-withdrawing group include a halogen atom, a sulfonic acid group or a salt thereof, a sulfonic acid ester, a nitro group, and a nitrile group.

In Formula (A1), when Y represents a monovalent organic group, the organic group is not particularly limited, and may be a hydrocarbon group, a group having a hetero atom, or a heterocyclic ring. More specific examples of Y include a monovalent group such as a hydrocarbon group and a group having a chemical structure in which one or more carbon atoms (methylene groups) in the hydrocarbon group are substituted with a linking group of -O-, -S-, -C(=O)-, or -C(=O)O-. Note that, when there are a plurality of linking groups, the linking groups are not adjacent to each other. In addition, the monovalent group may have a substituent that substitutes a hydrogen atom bonded to a carbon atom. The substituent may be a monovalent substituent, and examples thereof include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group.

The number of carbon atoms of Y may be 1 to 15, 1 to 10, 1 to 8, 1 to 5, or 1 to 3. The hydrocarbon group as Y is preferably a phenyl group, an alkyl group having 1 to 5 carbon atoms, or a group in which some or all of hydrogen atoms

bonded to carbon atoms of these groups are substituted with a halogen atom such as a fluorine atom, more preferably a fluorinated alkyl group having 1 to 5 carbon atoms, and still more preferably a fluorinated alkyl group having 1 to 3 carbon atoms such as a trifluoromethyl group. The fluorinated alkyl group may be a perfluorinated alkyl group. When Y represents a halogen atom, the halogen atom is preferably a fluorine atom or a chlorine atom, and more preferably a fluorine atom.

In Formula (A1), $M^+$ is preferably a lithium ion ($Li^+$), a sodium ion ($Na^+$), or a potassium ion ($K^+$), and more preferably a lithium ion. $M^+$ may contain two or three types of ions of $Li^+$, $Na^+$, and $K^+$, and preferably contains substantially only a single ion.

The group having a conjugated anion of the sulfonic acid group is a group having a group in which a hydrogen atom of the sulfonic acid group is substituted with an alkali metal (that is, referred to as a $-SO_3M$ group, where M represents an alkali metal, or an alkali metallized sulfonic acid group).

The group having a conjugated anion of the carboxylic acid group is a group having a group in which a hydrogen atom of the carboxylic acid group is substituted with an alkali metal (that is, a -COOM group, where M represents an alkali metal, or an alkali metallized carboxylic acid group).

The group having a conjugated anion of a phenolic hydroxyl group is a group having a group in which a hydroxyl group (that is, a phenolic hydroxyl group (-OH)) directly bonded to an aromatic ring is an alkali metallized group (that is, a -OM group, where M represents an alkali metal).

The structural unit (A) may be a structural unit represented by the following Formula (A2).

[Chem. 2]

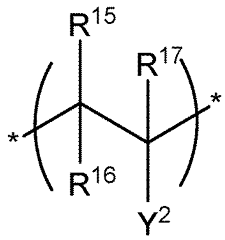

(A2)

(In Formula (A2), $Y^2$ represents a group having an alkali metallized sulfonylimide group, a group having an alkali metallized carboxylic acid group, a group having an alkali metallized phenolic hydroxyl group, or a group having an alkali metallized sulfonic acid group, and * represents a bonding position of the structural unit (A2) with another structural unit. $R^{15}$ to $R^{17}$ each independently represent a hydrogen atom or a monovalent substituent, or $R^{16}$ represents a hydrogen atom or a monovalent substituent, and $R^{15}$ and $R^{17}$ together form a divalent substituent.)

One or more of $R^{15}$ to $R^{17}$ may be a hydrogen atom, or may be all hydrogen atoms.

When $R^{15}$ to $R^{17}$ are monovalent substituents, the monovalent substituent may be a monovalent organic group. The number of carbon atoms of the organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the monovalent substituent may have a substituent that substitutes a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methyl group, an ethyl group, a propyl group, and a phenyl group.

For $R^{15}$ to $R^{17}$, the monovalent substituent may have an electron-withdrawing group, or may be an electron-withdrawing group itself. The electron-withdrawing group may be bonded to the monovalent organic group, and the monovalent organic group may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom.

When $R^{15}$ and $R^{17}$ together form a divalent organic group, the number of carbon atoms of the divalent organic group may be 1 to 20, 1 to 15, 1 to 10, 1 to 5, or 1 to 3. Examples of the organic group include a divalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the divalent organic group may have a substituent that substitutes a hydrogen atom

bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a propylene group and a butylene group.

When $Y^2$ represents a group having a phenolic hydroxyl group, $Y^2$ may be a group represented by any one of the following Formulas (A21) to (A26).

[Chem. 3]

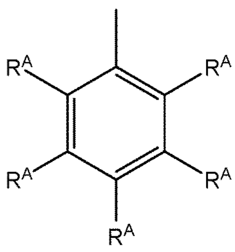

(A21)

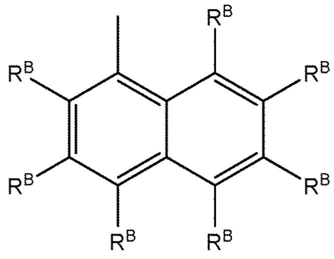

(A22)

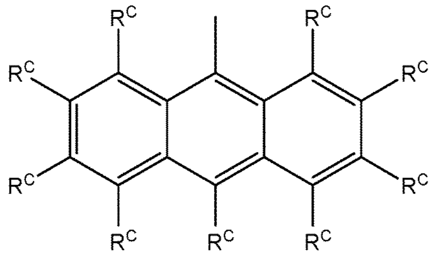

(A23)

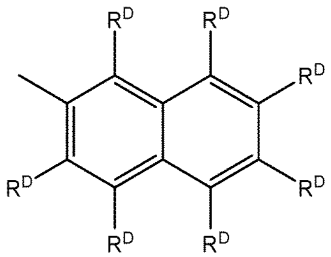

(A24)

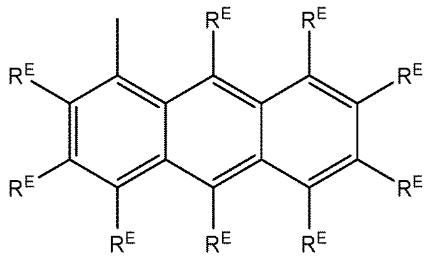

(A25)

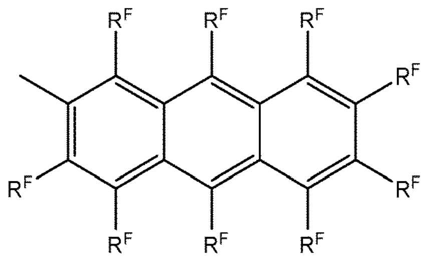

(A26)

(In Formula (A21), at least one of $R^A$ groups represents a -OM group, the rest is a hydrogen atom or a monovalent substituent, and M represents an alkali metal element, and may be Li, Na, or K. In Formula (A22), at least one of $R^B$ groups represents a -OM group, the rest is a hydrogen atom or a monovalent substituent, and M represents an alkali metal element, and may be Li, Na, or K. In Formula (A23), at least one of $R^C$ groups represents a -OM group, the rest is a hydrogen atom or a monovalent substituent, and M represents an alkali metal element, and may be Li, Na, or K. In Formula (A24), at least one of $R^D$ groups represents a -OM group, the rest is a hydrogen atom or a monovalent substituent, and M represents an alkali metal element, and may be Li, Na, or K. In Formula (A25), at least one of $R^E$ groups represents a -OM

group, the rest is a hydrogen atom or a monovalent substituent, and M represents an alkali metal element, and may be Li, Na, or K. In Formula (A26), at least one of $R^F$ groups represents a -OM group, the rest is a hydrogen atom or a monovalent substituent, and M represents an alkali metal element, and may be Li, Na, or K.)

When the polymer contains a functional group of Formula (A21), in the benzene ring of Formula (A21), a -OM group may be bonded to the para position as viewed from the bonding site between the functional group of Formula (A21) and the polymer. A hydrogen atom, a -OM group, a methyl group, an ethyl group, and a monovalent organic group having 1 to 20 carbon atoms (where, when the monovalent organic group is a saturated hydrocarbon group, the monovalent organic group is a methyl group, an ethyl group, or a group having 6 to 20 or 6 to 15 carbon atoms, and when the monovalent organic group is an alkoxy group, the monovalent organic group is a group having 4 to 20 or 4 to 15 carbon atoms) may each independently be bonded to the meta position or the ortho position and the meta position as viewed from the bonding site.

The groups represented by Formulas (A21) to (A26) may have one to three -OM groups, may have one or two -OM groups, and may have one -OM group.

In Formulas (A21) to (A26), the monovalent substituent is preferably an electron-withdrawing group. Examples of the electron-withdrawing group include a halogen atom, a sulfonic acid group or a salt thereof, a sulfonic acid ester, a nitro group, and a nitrile group. The halogen atom may be any of F, Cl, Br, and I.

In addition, in Formulas (A21) to (A26), the monovalent substituent may be an organic group having 1 to 20 carbon atoms. The number of carbon atoms of the organic group may be 1 to 15, 1 to 10, 1 to 5, or 1 to 3. Examples of the organic group include a monovalent group such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the monovalent group may have a substituent that substitutes a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methyl group, an ethyl group, a propyl group, and a phenyl group. Note that the monovalent organic group itself may be an electron-withdrawing group.

When $Y^2$ represents a group having a conjugated anion of a sulfonic acid, examples of $Y^2$ include a group represented by the following Formula (A3).

[Chem. 4]

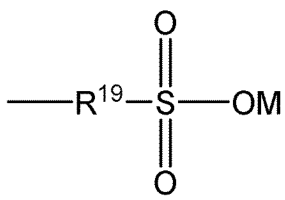

(A3)

(In Formula (A3), $R^{19}$ represents a covalent bond or a divalent organic group. M represents an alkali metal element and may be Li, Na, or K or may be Li.)

In Formula (A3), the number of carbon atoms of the divalent organic group may be 1 to 20, 1 to 15, 1 to 10, 1 to 5, or 1 to 3. Examples of the organic group include a divalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the divalent organic group may have a substituent that substitutes a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methylene group and a phenylene group.

Examples of the group having a conjugated anion of a sulfonic acid include $-SO_3M$, $-CH_2-SO_3M$, and $-C_6H_4-SO_3M$.

The functional group (B) is a functional group having a function as an anion receptor. The anion receptor refers to a chemical species that captures an anion by forming an electrostatic interaction, a hydrogen bond, an acid-base complex, or the like with the anion. The functional group (B) captures the counter anion of the metal ion in the metal salt and promotes

dissociation between the counter anion and the metal ion. This increases the mobility of the metal ions. Meanwhile, since the counter anion is captured by the polymer via the structural unit (B), the mobility of the counter anion decreases. In the polymer having the functional group (B), it is considered that the transference number of metal ions is improved as a result. In addition, since the mobility of metal ions increases, the polymer having the functional group (B) tends to improve the conductivity of metal ions.

Low molecular weight chemical species (compounds and the like) that function as anion receptors are known, and examples thereof include compounds described in US Patent No. 6022643, US Patent No. 5705689, US Patent No. 6120941, and the like. The functional group (B) has a structure corresponding to a chemical species that functions as an anion receptor. Since the functional group is immobilized on the polymer, it is considered that the captured anion can be immobilized on the structure of the polymer unlike a conventional low molecule anion receptor, and the participation of the anion in the current due to the movement can be more effectively suppressed.

Note that the counter anion of the alkali metal salt is not necessarily a completely ionized free anion when being captured by the functional group, and may be captured by interacting with the functional group in a state of forming an ionic bond or an ionic pair with a metal ion.

The functional group having a function as an anion receptor may have Lewis acidity. In this case, the functional group can capture an anion by accepting a non-covalent electron pair of anions and forming an acid-base complex. Examples of such a functional group include a functional group having an electron-deficient atom. Note that the electron-deficient atom refers to an atom that is covalently bonded to another atom but has no octet formed by the outermost electron of the atom. Examples of the electron-deficient atom include atoms belonging to group 13 of the periodic table, and more specifically, may be at least one of aluminum and boron, or may be boron.

In addition, the functional group having a function as an anion receptor may be a group having an azaether moiety. The group having an azaether moiety is a group having an azaether compound as a substituent, and the azaether compound is a compound in which -O- of an ether compound is substituted with $-NR^E-$ (where $R^E$ represents a hydrogen atom or an organic group). The azaether moiety may be either a linear azaether moiety or a cyclic azaether moiety and may have both a linear azaether moiety and a cyclic azaether moiety. The group having an azaether moiety may have an electron-withdrawing group in, for example, a hydrocarbon moiety.

Hereinafter, the structural unit containing the functional group (B) is also referred to as a structural unit (B). The functional group (B) may be contained, for example, in the structural unit (B) represented by the following Formula (B).

[Chem. 5]

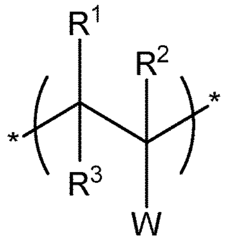

(B)

(In Formula (B), W represents a functional group having a function as an anion receptor, $R^1$ to $R^3$ each independently represent a hydrogen atom or a monovalent substituent, or $R^3$ represents a hydrogen atom or a monovalent substituent, and $R^1$ and $R^2$ together form a divalent organic group. * represents a position at which the structural unit (B) is bonded to another structural unit.)

The polymer having the ability to preferentially conduct metal ions may contain one or two or more structural units represented by Formula (B).

One or more of $R^1$ to $R^3$ may be a hydrogen atom, or all of them may be hydrogen atoms. W may be a group represented by the following Formula (B1).

When $R^1$ to $R^3$ are monovalent substituents, the monovalent substituent may be a monovalent organic group. The number of carbon atoms of the organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the monovalent substituent may have a substituent that substitutes a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methyl group, an ethyl group, a propyl

group, and a phenyl group.

Note that, in the present specification, the aromatic hydrocarbon group is a group having an aromatic moiety, and may have an aliphatic moiety. In addition, in the present specification, the cyclic hydrocarbon group is a group having a cyclic hydrocarbon moiety, and may have a linear or branched hydrocarbon moiety.

The monovalent substituent may have an electron-withdrawing group, or may be an electron-withdrawing group itself. The electron-withdrawing group may be bonded to the monovalent organic group, and the monovalent organic group may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom.

When $R^1$ and $R^2$ together form a divalent organic group, the number of carbon atoms of the divalent organic group may be 1 to 20, 1 to 15, 1 to 10, 1 to 5, or 1 to 3. Examples of the organic group include a divalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the divalent organic group may have a substituent that substitutes a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a propylene group and a butylene group.

W preferably has a group represented by the following Formula (B1).

[Chem. 6]

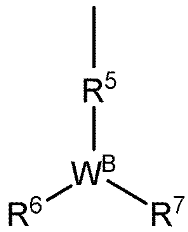

(B1)

(In Formula (B1), $W^B$ represents an atom belonging to group 13 of the periodic table, $R^5$ represents a covalent bond or a divalent organic group, and $R^6$ and $R^7$ represent a hydrogen atom, a -OH group, a halogen atom, or a monovalent organic group, or together form a divalent organic group. $R^6$ and $R^7$ may be the same group or different groups.)

$W^B$ may be at least one of aluminum and boron, or may be boron.

When $R^5$ represents a divalent organic group, the number of carbon atoms of the divalent organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the divalent organic group may have a substituent that substitutes a hydrogen atom bonded to a carbon atom. The substituent may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom. $R^5$ may be a hydrocarbon group, a halogen-substituted hydrocarbon group, or a group in which a hydrocarbon group or a halogen-substituted hydrocarbon group is bonded to $W^B$ via an ether bond. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group. $R^5$ may be a covalent bond.

When $R^6$ or $R^7$ represents a halogen atom, $R^6$ or $R^7$ may be any of a fluorine atom, a chlorine atom, a bromine atom, and an iodine atom, and a fluorine atom is preferable.

When $R^6$ or $R^7$ represents a monovalent organic group, the number of carbon atoms of the monovalent organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the monovalent organic group may have a substituent that substitutes a hydrogen atom bonded to a carbon atom. The substituent may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom. $R^6$ or $R^7$ may be a

hydrocarbon group, a halogen-substituted hydrocarbon group, or a group in which a hydrocarbon group or a halogen-substituted hydrocarbon group is bonded to $W^B$ via an ether bond. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group.

W may be a group represented by the following Formula (B1a) or a group represented by the following Formula (B1b).

[Chem. 7]

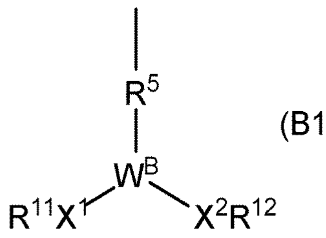

(B1a)

(In Formula (B1a), each of $X^1$ and $X^2$ represents an oxygen atom (ether bond) or a covalent bond, each of $R^{11}$ and $R^{12}$ represents a halogen atom, a monovalent hydrocarbon group, a hydrogen atom, or a monovalent halogen-substituted hydrocarbon group, and may be a halogen atom (excluding a case where X is an oxygen atom), a monovalent hydrocarbon group, or a monovalent halogen-substituted hydrocarbon group, and at least one of $R^{11}$ and $R^{12}$ may be a monovalent hydrocarbon group or a monovalent halogen-substituted hydrocarbon group. $R^{11}$ and $R^{12}$ may be the same group or different groups.)

[Chem. 8]

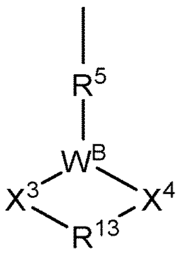

(B1b)

(In Formula (B1b), each of $X^3$ and $X^4$ represents an oxygen atom (ether bond) or a covalent bond, and $R^{13}$ represents a divalent hydrocarbon group or a divalent halogen-substituted hydrocarbon group.)

In Formula (B1a), when $R^{11}$ represents a halogen atom, $X^1$ may be a covalent bond, and when $R^{12}$ represents a halogen atom, $X^2$ may be a covalent bond. When $R^{11}$ or $R^{12}$ represent a monovalent hydrocarbon group or a monovalent halogen-substituted hydrocarbon group, the number of carbon atoms of the monovalent hydrocarbon group or the monovalent halogen-substituted hydrocarbon group may be 1 to 20, 1 to 15, 1 to 10, 1 to 5, or 1 to 3. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group.

$R^{11}$ or $R^{12}$ are each independently -F, $-CH_3$, $-C_2H_5$, $-C_3H_7$, $-C_6H_5$ (phenyl group), $-C_6H_nF_{5-n}$ (n is an integer of 0 to 4 and may be an integer of 0 to 3), $-CF_3$, $-CH_2CF_3$, $-CH_2CF_3CF_7$,$-CH(CF_3)_2$, $-C(CF_3)_2-C_6H_5$, $-C(CF_3)_3$, or $-C_6H_n(CF_3)_{5-n}$ (n is an integer of 0 to 4 and may be 1 or 2).

In Formula (B1b), the number of carbon atoms of the divalent hydrocarbon group or the divalent halogen-substituted hydrocarbon group may be 1 to 20, 1 to 15, 2 to 10, or 3 to 8. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group.

Examples of $R^{13}$ include $-C_2H_4-$, $-C_3H_6-$, $-C_4H_8-$, $-C_5H_{10}-$, $-C_6H_{12}-$, $-C_7H_{14}-$, $-C_8H_{16}-$, $-C_9H_{18}-$, and $-C_{10}H_{20}-$, in which these hydrogen atoms are partially or entirely substituted with fluorine. More specifically, $-C(CH_3)_2-C(CH_3)_2-$ is preferable.

A molar ratio m of the structural unit (B) with respect to all structural units contained in the polymer may be 0.2 to 0.8, 0.25 to 0.75, 0.3 to 0.7, 0.35 to 0.65, or 0.4 to 0.6.

A molar ratio n of the structural unit (A) with respect to all structural units contained in the polymer may be 0.25 to

0.75, 0.3 to 0.7, 0.35 to 0.65, or 0.4 to 0.6.

There is no problem as long as the sum of m and n is 1 or less, and the sum of m and n may be 0.95 or less. In addition, the sum of m and n may be 0.5 or more, 0.6 or more, 0.7 or more, 0.8 or more, 0.9 or more, or 0.95 or more.

A content of the structural unit (A) with respect to the total mass of the polymer may be 5 to 90% by mass, 20 to 80% by mass, 40 to 75% by mass, or 55 to 70% by mass.

A content of the structural unit (B) with respect to the total mass of the polymer may be 10 to 95% by mass, 15 to 95% by mass, 20 to 95% by mass, 20 to 80% by mass, 25 to 60% by mass, or 30 to 45% by mass.

The total content of the structural unit (A) and the structural unit (B) may be 50% by mass or more, 70% by mass or more, 90% by mass or more, or 95% by mass or more, with respect to the total mass of the polymer.

The polymer may contain a structural unit (C) which is a structural unit different from both the structural unit (A) and the structural unit (B). Examples of the structural unit (C) include a structural unit represented by a structural unit (C1) and a structural unit represented by a structural unit (C2) described below.

[Chem. 9]

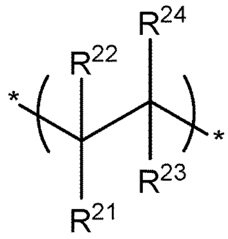

(C1)

(In Formula (C1), $R^{21}$ to $R^{24}$ each independently represent a hydrogen atom, a halogen atom, or a monovalent organic group having 1 to 20 carbon atoms. * represents a position at which the structural unit (C1) is bonded to another structural unit.)

[Chem. 10]

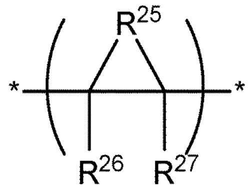

(C2)

(In Formula (C2), $R^{25}$ represents a divalent organic group having 1 to 20 carbon atoms, and each of $R^{26}$ and $R^{27}$ represents a hydrogen atom, a halogen atom, or a monovalent organic group having 1 to 20 carbon atoms. $R^{25}$ may form a ring having an ethylene unit of Formula (C2) and an imide group (succinimide ring or N-derivative thereof) or a ring having an acid anhydride group (succinic anhydride ring.)

One or two or more of $R^{21}$ to $R^{24}$ may be a monovalent organic group. The monovalent organic group may be a group represented by - $Z^1$-$R^{29}$. The number of carbon atoms in each of $R^{21}$ to $R^{24}$ may be 1 to 40, 1 to 20, 2 to 15, or 4 to 13. Here, $Z^1$ is a divalent linking group, and may be, for example, a group represented by a covalent bond, -O-, -S-, -C(=O)-, -C(=O)O-, -OC(=O)-, -C(=O)N$R^{38}$-, or -N$R^{39}$C(=O)-. When $Z^1$ represents a covalent bond, -O-, -S-, -C(=O)-, -C(=O)O-, or -OC(=O)-, $R^{29}$ represents a hydrogen atom or a monovalent organic group. When Z represents -C(=O)N$R^{38}$-, each of $R^{29}$ and $R^{38}$ represents a hydrogen atom or a monovalent organic group, or $R^{29}$ forms a ring together with $R^{38}$. In the case of -N$R^{39}$C(=O)-, each of $R^{29}$ and $R^{39}$ each independently represents a hydrogen atom or a monovalent organic group, or $R^{29}$ forms a ring together with $R^{39}$. The monovalent organic group as $R^{29}$, $R^{38}$, or $R^{39}$ may have 1 to 20 or 1 to 10 organic groups. When $R^{38}$ represents a monovalent organic group, $R^{38}$ may be a monovalent hydrocarbon group having 1 to 20 carbon atoms. When Z1 represents a covalent bond or - C(=O)O-, $R^{29}$ may be a hydrogen atom or a monovalent

hydrocarbon group having 1 to 20 carbon atoms. When Z1 represents a covalent bond and $R^{29}$ represents a hydrocarbon group, the hydrocarbon group may be an aliphatic hydrocarbon group. In addition, $R^{29}$ may be a monovalent organic group other than a hydrocarbon group or a hydrocarbon group having a ring structure. When $Z^1$ represents -O-, $Z^1$ may be a monovalent organic group other than a group represented by W-H with W as an alkyl ether. When $R^{26}$ to $R^{28}$ represent monovalent organic groups, examples of the monovalent organic group include the same groups as those exemplified for $R^{25}$.

In addition, the structural unit (C) may include a structural unit (also referred to as a structural unit (Ap)) that is a precursor of the structural unit (A). Examples of such a structural unit include an unreacted structural unit and an intermediate structural unit which could not be converted into the structural unit (A) among the structural units (for example, a structural unit derived from a monomer (A2') to be described later) which are precursors of the structural unit (A), and examples thereof include a group which is a conjugated acid of the structural unit (A) (that is, an alkali metal ion which is a counter cation of the structural unit (A) is substituted with $H^+$) and a group in which a counter cation of the structural unit (A) is substituted with a cation other than an alkali metal ion. Examples of the counter cation contained in the structural unit (Ap) include metal ions such as $NH_4^+$, an organic ammonium cation, and an alkaline earth metal ion. The polymer may contain the structural unit (A) in an amount of 85% by mol or more, 90% by mol or more, or 95% by mol or more, with respect to the total amount of the structural unit (A) and the structural unit (Ap).

The polymer may contain a structural unit derived from a hydrocarbon compound having a plurality of ethylenically unsaturated groups such as butadiene and isoprene.

The polymer may contain a structural unit derived from a crosslinking agent. Examples of the crosslinking agent include compounds having a plurality of ethylenically unsaturated groups in the molecule, such as hexanediol diacrylate, pentaerythritol tetraacrylate, divinylbenzene, and triethylene glycol divinyl ether.

A number average molecular weight (Mn) of the polymer may be 5,000 to 200,000, 8,000 to 120,000, or 10,000 to 100,000. A weight average molecular weight (Mw) of the polymer may be 5,000 to 300,000, 10,000 to 250,000, or 20,000 to 100,000. A molecular weight distribution (Mw/Mn) of the polymer may be 1.0 to 3.5 or 1.3 to 2.7. The number average molecular weight and the weight average molecular weight of the polymer can be measured by, for example, gel permeation chromatography.

The content of the polymer in the electrolyte composition (electrolyte layer) may be 75% by mass or less, 0.5 to 60 % by mass, or 1 to 45% by mass with respect to the total amount of the electrolyte composition (electrolyte layer).

The electrolyte composition may contain an alkali metal salt. This is particularly effective when the polymer contains the functional group (B). The alkali metal salt is not particularly limited, and examples thereof include MF, MCl, MBr, MI, $MClO_4$, $MPF_6$, $MBF_4$, $M_2SO_4$, $M[(C_hF_{2h+1})SO_3]$ (h is 0 to 3), and $M[(C_hF_{2h+1})SO_2]_2N$ (h is 0 to 3), where M is the alkali metal. M may be the same alkali metal element as the alkali metal element contained in the structural unit (A). M may be the same alkali metal element as the alkali metal element contained in the solid electrolyte material. M may be lithium, sodium or potassium.

The method for producing the polymer is not particularly limited, and examples thereof include a method of polymerizing a monomer (monomer mixture) including at least one of a monomer containing an alkali metal ionized anionic functional group or a monomer containing a precursor of the anionic functional group (hereinafter referred to as a monomer (A')), and a monomer containing a functional group having a function as an anion receptor (B'). The monomer may further include a monomer (C') different from the monomer (A') and the monomer (B').

The monomer (A') and the monomer (B') may have an ethylenically unsaturated group. In this case, the monomer (A') and the monomer (B') can be polymerized by radical addition polymerization. In this case, the monomer can be polymerized in the presence of an initiator. That is, the polymerization reaction may be performed in a polymerizable composition containing a monomer and an initiator.

The monomer (A') is a monomer from which the structural unit (A) is derived in the polymer. Examples of the monomer (A') include a monomer (A1') represented by the following Formula (A1') and a monomer (A2') represented by the following Formula (A2').

[Chem. 11]

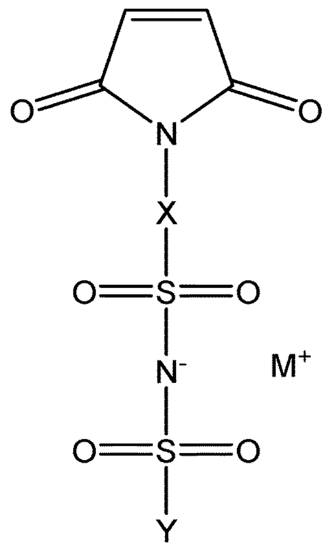

(A1')

(X, Y, and $M^+$ in Formula (A1') have the same meanings as in Formula (A).)

[Chem. 12]

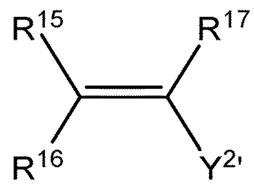

(A2')

(In Formula (A2'), $R^{15}$ to $R^{17}$ have the same meanings as $R^{15}$ to $R^{17}$ in Formula (A2), and Y2' represents a group that can derive a phenolic hydroxyl group corresponding to the -OM group in $Y^2$ in Formula (A2), a group that can derive a sulfonic acid group corresponding to the $-SO_3M$ group in $Y^2$, a group that can derive an alkali metallized sulfonylimide group in $Y^2$, or a group that can derive a group having an alkali metallized carboxylic acid in $Y^2$.)

$Y^{2'}$ may be the same group as $Y^2$, and may be a group that is a precursor of $Y^2$. That is, $Y^{2'}$ is a group having a group convertible to a - OM group or an $-SO_3M$ group at the same position as the -OM group or the $-SO_3M$ group of $Y^2$ to be obtained.

Examples of the group capable of deriving a phenolic hydroxyl group corresponding to the -OM group in $Y^2$ include a hydrolyzable group. By hydrolyzing the hydrolyzable group, a phenolic hydroxyl group can be introduced at a position corresponding to the -OM group in $Y^2$. Examples of the hydrolyzable group include an alkoxide group and a $-OSi(R^k)_3$ group ($R^k$ represents a monovalent organic group such as a hydrocarbon group). The phenolic hydroxyl group can be converted into a -OM group by reacting with, for example, a basic salt of an alkali metal such as MOH, $M_2CO_3$, or $MHCO_3$.

Similarly, examples of the group capable of deriving a sulfonic acid group corresponding to the $-SO_3M$ group in $Y^2$ include groups capable of deriving a sulfonic acid group ($-SO_3H$) such as a sulfonic acid ester group and a $-SO_2Cl$ group. The sulfonic acid group can be converted into a -OM group by, for example, reacting with a salt of an alkali metal such as MOH, $M_2CO_3$, $MHCO_3$, or an alkali metal halide. In addition, the $-SO_2Cl$ group can also be reacted with MOH to be converted into a $-SO_3M$ group. When an excess amount of MOH is used, most $-SO_2Cl$ groups can also be converted to $-SO_3M$ groups. In such a reaction, some $-SO_2Cl$ groups may be $-SO_3H$ group, and the $-SO_3H$ group may be reacted with a base containing M separately to form a $-SO_3M$ group. In addition, $Y^{2'}$ may be a group having the same anion moiety as $Y^2$

and forming a salt with a cation other than an alkali metal ion. In this case, the structural unit (A2) can be derived by subjecting the obtained polymer to a cation exchange reaction. A reaction rate of Y2' (a proportion of $Y^{2'}$ converted to $Y^2$ in the total amount of $Y^{2'}$) may be 85% by mol or more, 90% by mol or more, or 95% by mol or more.

Examples of the group capable of deriving an alkali metallized sulfonylimide group include a group having an alkali metallized sulfonylimide group or a group which is a conjugated acid thereof. The group capable of deriving a group having an alkali metallized carboxylic acid may be a carboxy group (-COOH) or a group having a salt thereof. When the monomer (A2') has a group capable of deriving a group having an alkali metallized carboxylic acid, the monomer (A2') may be an unsaturated fatty acid or a salt thereof. The unsaturated fatty acid may have one or more carboxy groups or salts thereof.

The monomer (B') is a monomer from which the structural unit (B) is derived in the polymer. Examples of the monomer (B') include a monomer (B') represented by the following Formula (B').

[Chem. 13]

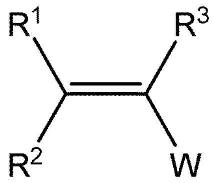

(B')

(In the formula, $R^1$ to $R^3$ and W have the same meanings as $R^1$ to $R^3$ and W in Formula (B).)

The radical polymerization initiator may be either a thermal initiator or a photoinitiator. For example, examples of the thermal initiator include 2,2-azobis(isobutyronitrile)(AIBN); an azo-based initiator such as 2,2-azobis(2-methylbutyronitrile) (AMBN), 2,2-azobis(2,4-dimethylvaleronitrile) (ADVN), 1,1-azobis(1-cyclohexanecarbonitrile) (ACHN, V-40), or dimethyl-2,2-azobisisobutyrate (MAIB); and an organic peroxide such as dibenzoyl peroxide, di-8,5,5-trimethylhexanoyl peroxide, dilauroyl peroxide, didecanoyl peroxide, or di(2,4-dichlorobenzoyl)peroxide. Examples of the photoinitiator include an oxime-based compound, a metallocene-based compound, an acylphosphine-based compound, and an aminoacetophenone compound. One or two or more initiators may be used.

The electrolyte layer (electrolyte composition) may contain a polymer electrolyte, a binding resin, an organic solvent, an ionic liquid, and the like as necessary.

The binding resin contained in the electrolyte layer is not particularly limited, and examples thereof include fluorine-based resins and synthetic rubbers. The fluorine-based resin is preferably a resin having a carbon chain as a main chain. The carbon chain may be formed by radical polymerization of an ethylenically unsaturated group. Examples of the fluororesin include poly(vinylidene fluoride-co-hexafluoropropylene) (PVDF-HFP) and polyvinylidene fluoride (PVDF). Examples of the synthetic rubber include styrene-butadiene rubber (SBR). The content of the binding resin in the electrolyte layer (electrolyte composition) may be 0.5 to 40% by mass or 1 to 30% by mass.

Examples of the organic solvent include the above-described organic solvents, and the organic solvent may contain a carbonate-based solvent or may be a mixed solvent containing two or more carbonate-based solvents. The content of the organic solvent in the electrolyte layer (electrolyte composition) may be 10 to 90% by mass, 30 to 80% by mass, or 50 to 75% by mass. In the electrolyte composition or the electrolyte, the polymer may be swollen by an organic solvent. The content of the organic solvent in the electrolyte composition or the electrolyte may be 10 to 500 parts by mass, 30 to 400 parts by mass, or 50 to 300 parts by mass with respect to 100 parts by mass of the total amount of the polymer having the ability to preferentially conduct metal ions and other resins (resins other than the polymer having the ability to preferentially conduct metal ions).

The electrolyte composition may include a solid electrolyte material. The solid electrolyte material is not particularly limited, and may be an oxide (oxide-based solid electrolyte), a sulfide (sulfide-based solid electrolyte), a hydride (hydride-based solid electrolyte), a halide (halide-based solid electrolyte), or the like. The solid electrolyte material may contain at least one of an alkali metal element and an alkaline earth metal element, and may contain an alkali metal element.

(Oxide-based Solid Electrolyte)

Examples of the oxide-based solid electrolyte include an oxide such as perovskite-type oxide, NASICON-type

oxide, LISICON-type oxide, or garnet-type oxide, and an oxide obtained by doping the oxide with other cations or anions.

Examples of the perovskite-type oxide include Li-La-Ti-based oxide such as $Li_aLa_{1-a}TiO_3$ (0 < a < 1), Li-La-Ta-based oxide such as $Li_bLa_{1-b}TaO_3$ (0 < b < 1), and Li-La-Nb-based oxide such as $Li_cLa_{1-c}NbO_3$ (0 < c < 1).

Examples of the NASICON-type oxide include $Li_{1+d}Al_dTi_{2-d}(PO_4)_3$ ($0 \leq d \leq 1$). The NASICON-type oxide is an oxide represented by $Li_mM^1{}_nM^2{}_oP_pO_q$ (in the formula, $M^1$ represents one or more elements selected from the group consisting of B, Al, Ga, In, C, Si, Ge, Sn, Sb, and Se. $M^2$ represents one or more elements selected from the group consisting of Ti, Zr, Ge, In, Ga, Sn, and Al. m, n, o, p, and q are random positive numbers), and examples thereof include $Li_{1+x+y}Al_x(Ti,Ge)_{2-x}Si_yP_{3-y}O_{12}$ (0<x<2, 0<y<3) (LATP).

Examples of the LISICON-type oxide include an oxide represented by $Li_4M^3O_4$-$Li_3M^4O_4$ ($M^3$ represents one or more elements selected from the group consisting of Si, Ge, and Ti. $M^4$ is one or more elements selected from the group consisting of P, As, and V).

Examples of the garnet-type oxide include Li-La-Zr-based oxide such as $Li_7La_3Zr_2O_{12}$ (LLZ) or $Li_{7-a2}La_3Zr_{2-a2}Ta_{a2}O_{12}$ (LLZT, 0 < a2 < 1, 0.1 < a2 < 0.8, 0.2 < a2 < 0.6).

The oxide-based solid electrolyte may be a crystalline material or an amorphous material.

Examples of the oxide-based solid electrolyte include $Li_{6.6}La_3Zr_{1.6}Ta_{0.4}O_{12}$ and $Li_{0.33}La_{0.55}TiO_3$.

(Sulfide-based Solid Electrolyte)

Examples of the sulfide-based solid electrolyte include a $Li_2S$-$P_2S_5$-based compound, a $Li_2S$-$SiS_2$-based compound, a $Li_2S$-$GeS_2$-based compound, a $Li_2S$-$B_2S_3$-based compound, a $Li_2S$-$P_2S_3$-based compound, LiI-$Si_2S$-$P_2S_5$, LiI-$Li_2S$-$P_2O_5$, LiI-$Li_3PO_4$-$P_2S_5$, and $Li_{10}GeP_2S_{12}$.

Note that, in the present specification, the expression "-based compound" indicating a sulfide-based solid electrolyte is used as a generic term for solid electrolytes mainly containing raw materials such as "$Li_2S$" and "$P_2S_5$" described before "-based compound". For example, the $Li_2S$-$P_2S_5$-based compound includes a solid electrolyte containing $Li_2S$ and $P_2S_5$ and further containing other raw materials. In addition, the $Li_2S$-$P_2S_5$-based compound also includes a solid electrolyte in which a mixing ratio of $Li_2S$ and $P_2S_5$ is different.

Examples of the $Li_2S$-$P_2S_5$-based compound include $Li_2S$-$P_2S_5$, $Li_2S$-$P_2S_5$-LiI, $Li_2S$-$P_2S_5$-LiCl, $Li_2S$-$P_2S_5$-LiBr, $Li_2S$-$P_2S_5$-$Li_2O$, $Li_2S$-$P_2S_5$-$Li_2O$-LiI, and $Li_2S$-$P_2S_5$-$Z_mS_n$ (m and n are positive numbers, and Z is Ge, Zn, or Ga).

Examples of the $Li_2S$-$SiS_2$-based compound include $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$SiS_2$-$Li_3PO_4$, $Li_2S$-$SiS_2$-$Li_2SO_4$, and $Li_2S$-$SiS_2$-$Li_xMO_y$ (x and y represent positive numbers, and M represents P, Si, Ge, B, Al, Ga, or In).

Examples of the $Li_2S$-$GeS_2$-based compound include $Li_2S$-$GeS_2$ and $Li_2S$-$GeS_2$-$P_2S_5$.

The sulfide-based solid electrolyte may be a crystalline material or an amorphous material.

(Hydride-based Solid Electrolyte)

Examples of the hydride-based solid electrolyte material include $LiBH_4$, $LiBH_4$-3KI, $LiBH_4$-$PI_2$, $LiBH_4$-$P_2S_5$, $LiBH_4$-$LiNH_2$, $3LiBH_4$-LiI, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, and $Li_4(BH_4)(NH_2)_3$.

(Halide-based Solid Electrolyte)

Examples of the halide solid electrolyte include a compound containing Li, a metal element, and a halogen element.

The halide solid electrolyte may be a crystalline material or an amorphous material.

Examples of the solid electrolyte material include compounds in which a part or all of Li of the compounds listed as specific examples of the oxide-based solid electrolyte, the sulfide-based solid electrolyte, the hydride-based solid electrolyte, or the halide-based solid electrolyte is substituted with Na, K, Rb, or Cs.

The positive electrode layer may be formed of a positive electrode material. The positive electrode material (positive electrode layer) may contain a positive electrode active material, and if necessary, a polymer electrolyte, a binding resin, a conductive auxiliary agent, an organic solvent, an ionic liquid, and the like. The positive electrode layer may be formed on the current collector.

The positive electrode active material is not particularly limited, and examples thereof include an alkali metal composite oxide containing an alkali metal element and at least one metal element selected from the group consisting of a transition metal element and Al. The transition metal element may be at least one selected from the group consisting of V, Cr, Mn, Fe, Co, Ni, and Cu, and may contain Ni. For example, when the alkali metal element is lithium (that is, in the case of a lithium composite oxide), examples of such a lithium composite metal oxide include $LiCoO_2$, $LiNiO_2$, $LiMn_2O_4$, $Li_2MnO_3$, $LiNi_xMn_yCo_{1-x-y}O_2$[0 < x+y < 1], $LiNi_xCo_yAl_{1-x-y}O_2$[0 < x+y < 1], $LiCr_{0.5}Mn_{0.5}O_2$, $LiFePO_4$, $Li_2FeP_2O_7$, $LiMnPO_4$, $LiFeBO_3$, $Li_3V_2(PO_4)_3$, $Li_2CuO_2$, $Li_2FeSiO_4$, and $Li_2MnSiO_4$. When the positive electrode active material contains an alkali metal

element other than Li, specific examples thereof include those in which Li in the above specific examples is substituted with another alkali metal. Examples of the alkali metal other than Li include Na and K.

The binding resin contained in the positive electrode layer (positive electrode material) of the present embodiment is not particularly limited, but examples thereof include fluorine-based resins. The fluorine-based resin is preferably a resin having a carbon chain as a main chain. The carbon chain may be formed by radical polymerization of an ethylenically unsaturated group. Examples of the fluororesin include poly(vinylidene fluoride-co-hexafluoropropylene) (PVDF-HFP) and polyvinylidene fluoride (PVDF). The content of the binding resin in the positive electrode layer may be 0.5 to 15% by mass or 1 to 10% by mass.

As the conductive auxiliary agent, examples of carbon materials include carbon nanotubes; graphites such as natural graphite (scale-like graphite) and artificial graphite; carbon blacks such as acetylene black, Ketjen black, channel black, furnace black, lamp black, and thermal black; and carbon fiber. The carbon nanotube may be a single layer or a multilayer, or may be a multilayer. The average length of the carbon nanotubes may be 1 μm or more, and may be 5 μm or more. The conductivity of the carbon nanotube may be metallic. The average diameter of the carbon nanotubes may be 0.4 nm to 100 nm. The BET specific surface area of the carbon nanotube may be 400 $m^2/g$ or less. The G/D ratio of the carbon nanotube may be 10 or less. The tensile strength of the carbon nanotubes may be 50 to 70 MPa. The content of the conductive auxiliary agent in the positive electrode layer may be 0.05 to 15% by mass, 0.1 to 10% by mass, 0.5 to 10% by mass, or 1 to 7% by mass.

Examples of the solid electrolyte material contained in the positive electrode include those described above.

The content of the positive electrode active material in the positive electrode material may be 50% by mass or more, 60% by mass or more, or 70% by mass or more with respect to the total amount of the positive electrode material. The content of the positive electrode active material in the positive electrode material may be 99% by mass or less, 95% by mass or less, or 90% by mass or less with respect to the total amount of the positive electrode material. In addition, the content of the positive electrode active material in the positive electrode material may be 50 to 99% by mass or more, 60 to 95% by mass or more, or 70 to 90% by mass or more with respect to the total amount of the positive electrode material.

The positive electrode material (positive electrode layer) may contain a polymer having the ability to preferentially conduct the metal ions. The content of the polymer in the positive electrode material (positive electrode layer) may be 15% by mass or less, 0.5 to 10% by mass, or 1 to 7% by mass with respect to the total amount of the electrolyte composition (electrolyte layer).

The thickness of the positive electrode layer may be 1 to 200 μm, 10 to 150 μm, or 20 to 100 μm.

The negative electrode layer may be formed of a negative electrode material. The negative electrode material may contain a negative electrode active material, and if necessary, a polymer electrolyte, a binding resin, a conductive auxiliary agent, an organic solvent, an ionic liquid, and the like. The negative electrode material (negative electrode layer) may contain a polymer having the ability to preferentially conduct the metal ions. The negative electrode layer may be formed on the current collector.

Examples of the negative electrode active material include simple substances of elements such as alkali metal elements, Si, P, Sn, Si-Mn, Si-Co, Si-Ni, In, and Au, alloys containing these elements, or composites, carbon materials such as graphite, substances in which alkali metal ions are inserted between layers of the carbon materials, and oxides containing titanium. Specifically, the negative electrode active material may contain at least one selected from the group consisting of an oxide containing titanium, an active material containing silicon, and a carbon material. Examples of the active material containing silicon include silicon, silicon oxide (SiOx, $1 \leq x \leq 2$), and a silicon-containing alloy. Examples of the carbon material include graphite and hard carbon. The alkali metal element may be Li, Na, or K, may be Li or Na, or may be Li.

The oxide containing titanium may be a compound (A represents an alkali metal element, and $s \geq 0$) represented by the composition formula $A_sTiO_t$. Here, the alkali metal element A may be Li, Na, or K, may be Li or Na, or may be Li. In the composition formula, s may be 0.1 to 2, 0.3 to 1.5, or 0.5 to 1. In the composition formula, t may be 2 to 3 or 2.2 to 2.8. Specifically, examples of the oxide containing titanium include $A_4Ti_5O_{12}$ (A represents an alkali metal and may be Li).

The binding resin contained in the negative electrode layer (negative electrode material) of the present embodiment is not particularly limited, but examples thereof include fluorine-based resins. The fluorine-based resin is preferably a resin having a carbon chain as a main chain. The carbon chain may be formed by radical polymerization of an ethylenically unsaturated group. Examples of the fluororesin include poly(vinylidene fluoride-co-hexafluoropropylene) (PVDF-HFP) and polyvinylidene fluoride (PVDF). The content of the binding resin in the negative electrode layer may be 0.5 to 10% by mass or 1 to 7% by mass.

As the conductive auxiliary agent, examples of carbon materials include graphites such as natural graphite (scale-like graphite) and artificial graphite; carbon blacks such as acetylene black, Ketjen black, channel black, furnace black, lamp black, and thermal black; and carbon fiber. The content of the conductive auxiliary agent in the negative electrode layer may be 0.5 to 10% by mass or 1 to 7% by mass.

Examples of the solid electrolyte material contained in the negative electrode include those described above.

The content of the negative electrode active material in the negative electrode material (or the negative electrode

layer) may be 50% by mass or more, 60% by mass or more, 70% by mass or more, 99% by mass or less, 95% by mass or less, or 90% by mass or less with respect to the total amount of the negative electrode material.

The negative electrode material (negative electrode layer) may contain a polymer having the ability to preferentially conduct the metal ions. The content of the polymer in the negative electrode material (negative electrode layer) may be 15% by mass or less, 0.5 to 10% by mass, or 1 to 7% by mass with respect to the total amount of the electrolyte composition (electrolyte layer).

The thickness of the negative electrode layer may be 1 to 200 μm, 10 to 150 μm, or 20 to 100 μm.

The peel strength between the positive electrode layer and the electrolyte layer may be 1 N/m or more.

The peel strength between the negative electrode layer and the electrolyte layer may be 1 N/m or more.

Examples of the battery according to the present embodiment include batteries that perform charge and discharge by movement of alkali metal ions, such as a lithium ion battery and a sodium ion battery. The battery may be a primary battery, a secondary battery, or a solid-state battery.

In the present embodiment, a composite membrane including: a fiber substrate or a porous substrate; and a polymer having an ability to preferentially conduct metal ions is also provided. Such a composite membrane can be used, for example, for an electrolyte of a battery. In addition, the composite membrane may be disposed as a short circuit preventing film between the positive electrode and another electrolyte or between the negative electrode and another electrolyte.

The material of the fiber substrate or the porous substrate (hereinafter also referred to as a substrate) is not particularly limited, and may be an organic material or an inorganic material, and may be a natural product or a synthetic resin. The substrate may have a sheet shape. Examples of the substrate include a fabric, a polymer film, and an inorganic porous film. The fabric may be a woven fabric or a nonwoven fabric. The fibers included in the fabric may be at least one of polymer fibers and inorganic fibers. Examples of the substrate containing a natural product include a substrate containing vegetable fibers such as paper and a substrate containing animal fibers such as wool. The synthetic resin is not particularly limited, and examples thereof include polyolefins, polyamides, polyimides, polyamideimides, polyacetals, polyacrylics, polyesters, polycarbonates, polysulfones, polyphenylene sulfides, polyether ether ketones, polyether sulfone polyetherimides, cellulose ethers, polybenzimidazole, polyurethanes, melamine resins, or copolymers or mixtures thereof. The substrate may be obtained by laminating a porous membrane of polyolefin (for example, polyethylene) and aromatic polyamide (aramid), or may contain a polyolefin porous film. The inorganic material is not particularly limited, and examples thereof include glass. Examples of the inorganic substrate include glass wool and a porous glass film. The inorganic material may have ion conductivity. The substrate may contain one or more materials.

The thickness of the substrate may be 1 to 20 μm, 5 to 15 μm, or 9 to 15 μm. When the film thickness is 1 μm or more, a function (strength or the like) required for the substrate can be sufficiently obtained.

The pore size of the pores of the substrate may be 1.0 μm or less, 0.5 μm or less, or 0.1 μm or less. Thereby, sufficient ion permeability can be obtained, and entry of particles constituting the electrode can be further prevented.

The weight per unit area of the substrate may be usually 1 to 20 $g/m^2$ or 3 to 12 $g/m^2$ such that the weight energy density and volume energy density of the battery can be increased.

The air permeability of the substrate may be 1 to 500 s/100 mL or 30 to 300 s/100 mL in Gurley value. As a result, the composite membrane can obtain sufficient ion permeability.

The porosity of the substrate may be 20 to 90% by volume or 30 to 75% by volume. As a result, it is possible to increase the holding amount of the electrolytic solution and reliably prevent (shut down) an excessive current from flowing at a lower temperature.

The piercing strength of the substrate may be 0.5 N or more, and may be 2 N or more. When the piercing strength is in such a range, the composite membrane is broken by the positive and negative electrode active material particles and the short circuit of the positive and negative electrodes tends to be suppressed in the laminating winding operation of the battery assembly process, the clamping operation of the winding group, the case where the pressure is applied to the battery from the outside, or the like.

Here, the "polyolefin porous film" is a porous film containing a polyolefin-based resin as a main component. The phrase "mainly composed of a polyolefin-based resin" means that the ratio of the polyolefin-based resin in the porous film is 50% by volume or more, preferably 90% by volume or more, and more preferably 95% by volume or more of the entire materials constituting the porous film.

The polyolefin-based resin which is the main component of the polyolefin porous film is not particularly limited, and examples thereof include homopolymers and copolymers in which monomers such as ethylene, propylene, 1-butene, 4-methyl-1-pentene and/or 1-hexene, which are thermoplastic resins, are polymerized. That is, examples of the homopolymer include polyethylene, polypropylene, and polybutene, and examples of the copolymer include an ethylene-propylene copolymer. The polyolefin porous film may be a layer containing these polyolefin-based resins alone or a layer containing two or more of these polyolefin-based resins.

Examples of the polyethylene include low density polyethylene, high density polyethylene, linear polyethylene (ethylene-α-olefin copolymer), and ultra high molecular weight polyethylene. The polyethylene may be ultra-high

molecular weight polyethylene, and may contain a high molecular weight component having a weight average molecular weight of $5 \times 10^5$ to $15 \times 10^6$.

The method for producing the polyolefin porous film can be a known method, and is not particularly limited. For example, as described in Japanese Patent No. 5476844, there is a method in which a filler is added to a thermoplastic resin to form a film, and then the filler is removed.

Specifically, for example, when the polyolefin porous film is formed of a polyolefin-based resin containing ultra-high molecular weight polyethylene and a low molecular weight polyolefin having a weight average molecular weight of 10,000 or less, the polyolefin porous film is preferably produced by a method including the following steps (1) to (4) from the viewpoint of production cost.

(1) a step of obtaining a polyolefin-based resin composition by kneading 100 parts by mass of ultra-high molecular weight polyethylene, 5 parts by mass to 200 parts by mass of low molecular weight polyolefin having a weight average molecular weight of 10,000 or less, and 100 parts by mass to 400 parts by mass of an inorganic filler such as calcium carbonate,
(2) a step of molding a sheet using a polyolefin-based resin composition,
(3) a step of removing the inorganic filler from the sheet obtained in the step (2), and
(4) a step of stretching the sheet obtained in the step (3).

In addition, the method described in each of the above-described Patent Literature may be used.

The method for producing the composite membrane is not particularly limited, and examples thereof include a method in which a substrate is impregnated with a polymer having an ability to preferentially conduct metal ions and dried. When the substrate is impregnated with the polymer, the substrate may be impregnated with the polymer as the electrolyte composition described above. The composite membrane may be produced by a roll-to-roll method.

## Examples

[Production of Polymer Having Ability to Preferentially Conduct Metal ions]

A copolymer of a monomer A1 represented by the following formula and styrene (molar ratio: 54:46) was produced as follows.

[Chem. 14]

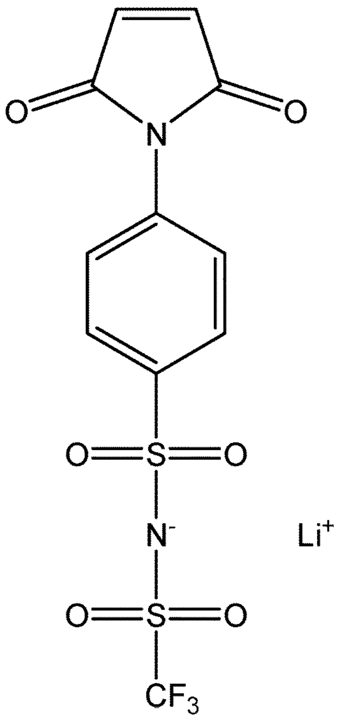

(A1)

First, the monomer A1 was produced as follows.

(Synthesis of Monomer A1)

Under a nitrogen atmosphere, trifluoromethanesulfonamide (52.5 mmol, 7.83 g, manufactured by Tokyo Chemical Industry Co., Ltd.) was dissolved in dehydrated acetonitrile (150 mL, manufactured by KANTO CHEMICAL CO., INC.). Lithium hydroxide (105 mmol, 2.51 g, manufactured by Tokyo Chemical Industry Co., Ltd.) and 4-acetamidobenzenesulfonyl chloride (50 mmol, 11.68 g, manufactured by Tokyo Chemical Industry Co., Ltd.) were sequentially added to the solution, and the mixture was heated and refluxed for 5 hours. After cooling to room temperature, an excessive amount of acetonitrile (700 mL) was added to precipitate a solid, which was separated by filtration and then washed with dichloromethane (manufactured by KANTO CHEMICAL CO., INC.), thereby obtaining an intermediate 1. The yield was 97.1%.

· Structural formula of intermediate 1:

[Chem. 15]

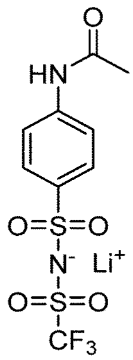

Under a nitrogen atmosphere, 5% hydrochloric acid (22.5 mL) was added to the intermediate 1 (15 mmol, 5.28 g), and the mixture was stirred at 90°C for 2 hours. After cooling to room temperature, an aqueous lithium hydroxide solution was added until the pH reached 7 or higher under the confirmation with a pH test paper or the like, and then a solid was obtained by drying under reduced pressure. The obtained solid was extracted with an acetonitrile solution, and dried under reduced pressure, thereby obtaining an intermediate 2. The yield was 92.6% based on the raw material of the intermediate 1.

· Structural formula of intermediate 2:

[Chem. 16]

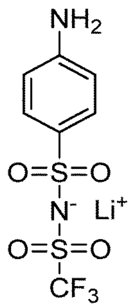

Under a nitrogen atmosphere, maleic anhydride (13.3 mmol, 1.30 g, manufactured by Tokyo Chemical Industry Co., Ltd.) was dissolved in dehydrated 1,4-dioxane (manufactured by KANTO CHEMICAL CO., INC.). The entire amount of a dehydrated tetrahydrofuran (26.4 mL, manufactured by KANTO CHEMICAL CO., INC.) solution of the intermediate 2 (13.2 mmol, 4.09 g) prepared under a nitrogen atmosphere was added dropwise to the solution, and the mixture was stirred at room temperature for 12 hours. After the reaction, a precipitate was filtered and vacuum-dried at 60°C for 4 hours, thereby obtaining a solid containing an intermediate 3.

· Structural formula of intermediate 3:

[Chem. 17]

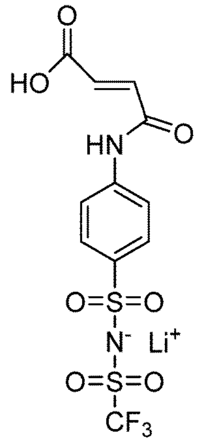

Under a nitrogen atmosphere, a solid containing the intermediate 3 (14.0 mmol, 5.70 g) and an aqueous sodium acetate solution (13.3 mmol, 1.09 g, manufactured by Tokyo Chemical Industry Co., Ltd.) were added to acetic anhydride (12.3 mL, manufactured by Tokyo Chemical Industry Co., Ltd.), and the mixture was stirred at 70°C for 3 hours. The entire amount of the solution after the reaction was added dropwise to an excess amount of diethyl ether (manufactured by KANTO CHEMICAL CO., INC.) at 0°C, and a precipitate was collected by filtration. Under an inert atmosphere, the precipitate was extracted with dehydrated acetonitrile (manufactured by KANTO CHEMICAL CO., INC.) and dried under reduced pressure, thereby obtaining the monomer A1. The yield throughout the entire process was 72.8%.

3.121 g of the monomer A1, 0.833 g of styrene, and 57.5 mg of AIBN were dissolved in 70 mL of dehydrated acetonitrile, and the mixture was reacted at 60°C for 24 hours under a nitrogen atmosphere while confirming a monomer consumption rate by adding tetralin as an internal standard substance. A polymerization solution was dialyzed in acetonitrile and vacuum-dried at 120°C, thereby obtaining 3.50 g (yield 89%) of a polymer. A monomer introduction ratio was A1:styrene = 54:46. The monomer introduction ratio was calculated from $^1$H-NMR of the copolymer. Note that, as styrene, a commercially available reagent having a purity of > 98% manufactured by Aldrich Chemical Company, Inc. was sealed with $CaCl_2$ and dried overnight, and $CaH_2$ was added and distilled under reduced pressure to improve the purity.

In the copolymer, the number average molecular weight Mn was $9.3 \times 10^4$, the weight average molecular weight Mw was $3.0 \times 10^5$, and the molecular weight distribution Mw/Mn was 3.19.

[Production of Electrode Material]

(Positive Electrode Material 1)

$LiNi_{1/3}Co_{1/3}Mn_{1/3}O_2$ as a positive electrode active material, acetylene black, and polyvinylidene fluoride (PVDF) were mixed at a mass ratio of 87:4.3:8.7 to obtain a positive electrode material 1. Details of the positive electrode active material are as follows.

Nominal: $LiNi_{1/3}Co_{1/3}Mn_{1/3}O_2$
Composition analysis by ICP: $Li_{1.03}Ni_{0.33}Co_{0.33}Mn_{0.34}O_2$
Crystal structure: R-3m
Average particle size: 10 μm

(Positive Electrode Material 2)

$LiFePO_4$ (LFP) as a positive electrode active material, the polymer having the ability to preferentially conduct metal ions produced as described above, carbon nanotubes, and poly(vinylidene fluoride-co-hexafluoropropylene) (PVDF-HFP) were mixed at a mass ratio of 93.5:3:0.5:3 to obtain a positive electrode material 2. Details of the positive electrode active material are as follows. The carbon nanotubes had multiple layers and an average diameter of 10 nm.

Nominal: $LiFePO_4$
Crystal structure: Pnma
Average particle size: 1.0 μm

(Negative Electrode Material 1)

Lithium titanate ($Li_4Ti_5O_{12}$) as a negative electrode active material, the polymer having the ability to preferentially conduct metal ions produced as described above, acetylene black, and polyvinylidene fluoride (PVDF) were mixed at a mass ratio of 87:4.3:4.3:4.3 to obtain a negative electrode material 1. Details of the negative electrode active material are as follows.

$Li_4Ti_5O_{12}$

Crystal structure: spinel structure
Average particle size: 10 μm

[Production of Electrolyte]

(Electrolyte 1)

The polymer having the ability to preferentially conduct metal ions produced as described above and poly(vinylidene fluoride-co-hexafluoropropylene) (PVDF-HFP) were incorporated at a mass ratio of 50:50 and dissolved in DMF. The polyethylene film was impregnated with this solution and dried to obtain a composite membrane. An organic solvent (ethylene carbonate:propylene carbonate = 1:1 (volume ratio)) (Kishida Chemical Co., Ltd.) was incorporated into the composite membrane in an amount of 200 parts by mass with respect to 100 parts by mass of the total mass of the polymer having the ability to preferentially conduct metal ions and PVDF-HFP to produce an electrolyte composition (electrolyte 1).

(Electrolyte 2)

Lithium bisfluorosulfonylimide (LiFSI) manufactured by Kishida Chemical Co., Ltd. was mixed with a 10% by mass aqueous solution of polyethylene oxide (poly(ethylene oxide) average Mv 600,000, powder) manufactured by Aldrich Chemical Company, Inc. at a molar ratio of O atoms:Li atoms = 20:1 with polyethylene oxide to obtain an electrolyte 2.

(Electrolyte 3)

The polymer having the ability to preferentially conduct metal ions produced as described above and poly(vinylidene fluoride-co-hexafluoropropylene) (PVDF-HFP) were incorporated at a mass ratio of 100:50 and dissolved in DMF. The polyethylene film was impregnated with this solution and dried to obtain a composite membrane. An organic solvent (ethylene carbonate:propylene carbonate = 1:1 (volume ratio)) (Kishida Chemical Co., Ltd.) was incorporated into the composite membrane in an amount of 100 parts by mass with respect to 100 parts by mass of the total mass of the polymer having the ability to preferentially conduct metal ions and PVDF-HFP to produce an electrolyte composition (electrolyte 3).

<Charge-Discharge Test>

In a glove box, under a dry argon atmosphere, an evaluation cell (half cell) of the coin type battery CR2032 was assembled using an electrode material and an electrolyte composition produced by combining materials shown in Table 1. Specifically, the respective layers were laminated in the following order in the evaluation cell to prepare a test laminate.

(Positive Electrode/Electrolyte Composition/Lithium)

Charge-discharge measurement was performed in a range of 2.5 to 4.3 V (vs. $Li/Li^+$) using the evaluation cell. The number of cycles was 5 in Example 1 and Comparative Example 1, and 10 in Example 2 and Example 3.

[Table 1]

| | Electrode | | Electrolyte layer | | Thickness ratio* |
|---|---|---|---|---|---|
| | Material | Thickness (μm) | Material | Thickness (μm) | |
| Example 1 | Positive electrode material 1 | 32 | Electrolyte 1 | 49 | 0.65 |

(continued)

| | Electrode | | Electrolyte layer | | Thickness ratio* |
|---|---|---|---|---|---|
| | Material | Thickness (μm) | Material | Thickness (μm) | |
| Example 2 | Negative electrode material 1 | 50 | Electrolyte 1 | 68 | 0.74 |
| Example 3 | Positive electrode material 2 | 62 | Electrolyte 3 | 110.75 | 0.56 |
| Comparative Example 1 | Positive electrode material 1 | 15 | Electrolyte 2 | 75 | 0.20 |
| * Thickness of active electrode/Thickness of electrolyte layer | | | | | |

FIGS. 1 to 5 show the results of the charge-discharge tests performed on the half cells according to Example 1, Example 2, Example 3, and Comparative Example 1, respectively. In the battery according to Example 1, the cycle capacity retention rate after 5 cycles was 97%. On the other hand, in the battery according to Comparative Example 1, the cycle capacity retention rate after 5 cycles was 70%. The batteries according to Examples 2 and 3 also operated normally.

<Evaluation by full cell>

An evaluation cell (full cell) of the coin type battery CR2032 was prepared in the same manner as in Example 1 except that the negative electrode material according to Example 2 was used for the negative electrode. Using the evaluation cell, 10 cycles of charge and discharge measurement were performed in the range of 0.5 to 3.3 V (vs. Li/Li+). FIG. 4 is a diagram showing results of a charge-discharge test of the full cell.

<Measurement of Lithium Ion Transference Number>

(Reference Example 1)

An electrolyte composition containing the polymer having the ability to preferentially conduct metal ions produced as described above, poly(vinylidene fluoride-co-hexafluoropropylene) (PVDF-HFP), and an organic solvent (ethylene carbonate:propylene carbonate = 1:1 (volume ratio)) (Kishida Chemical Co., Ltd.) at a mass ratio of 17:17:66 was produced.

(Reference Comparative Example 1)

Comparative Example: An electrolyte composition containing a mixture of polyethylene oxide (poly(ethylene oxide) average Mv 600,000, powder) manufactured by Aldrich Chemical Company, Inc. and lithium bisfluorosulfonylimide (LiFSI) manufactured by KANTO CHEMICAL CO., INC. (O atoms: Li atoms = 20:1 in molar ratio) was produced.

The transference number of the electrolyte composition was measured by the following method. The results are shown in Table 2.

Lithium ion transference number:
In a glove box, under a dry argon atmosphere, an evaluation cell of the coin-type lithium battery CR2032 was assembled. Specifically, the respective layers were laminated in the following order in the evaluation cell to prepare a test laminate. (Lithium/Electrolyte Composition/Lithium)

The lithium ion transference number measurement method is introduced in Polymer, 28, 2324 (1987). That is, at room temperature (25°C), 10 mV was applied to a test laminate, an initial current value ($I_0$) and a steady current value ($I_{ss}$) were measured, and an interface resistance measurement value $R_0$ before voltage application and an interface resistance measurement value $R_{SS}$ after voltage application were obtained by a complex impedance method. Then, the obtained value was introduced into the following formula and a lithium ion transference number ($t_{Li+}$) was determined. V in the formula represents the applied voltage.

$$t_{Li+} = I_{ss}(V - I_0R_0)/I_0(V - I_{SS}R_{SS})$$

[Table 2]

| | Lithium ion transference number (-) |
|---|---|
| Reference Example 1 | 0.91 |
| Reference Comparative Example 1 | 0.40 |

## Claims

**1.** A battery comprising

a positive electrode layer, a negative electrode layer, and an electrolyte layer disposed between the positive electrode layer and the negative electrode layer, wherein
the electrolyte layer contains a polymer having an ability to preferentially conduct metal ions, and
a thickness ratio between the positive electrode layer and the electrolyte layer is 10:1 to 0.5:1.

**2.** A battery comprising

a positive electrode layer, a negative electrode layer, and an electrolyte layer disposed between the positive electrode layer and the negative electrode layer, wherein
the electrolyte layer contains a polymer having an ability to preferentially conduct metal ions, and
a thickness ratio between the negative electrode layer and the electrolyte layer is 5:1 to 0.5:1.

**3.** The battery according to claim 1 or 2, wherein the polymer contains at least one of an anionic functional group having an alkali metal ion as a counter cation and a functional group having an anion scavenging ability.

**4.** The battery according to claim 1 or 2, wherein the positive electrode layer contains a lithium composite oxide containing nickel as a positive electrode active material.

**5.** The battery according to claim 1 or 2, wherein the negative electrode layer contains, as a negative electrode active material, at least one selected from the group consisting of an oxide containing titanium, an active material containing silicon, and a carbon material.

**6.** The battery according to claim 1 or 2, wherein the electrolyte layer contains an ionic liquid.

**7.** The battery according to claim 1, wherein a peel strength between the positive electrode layer and the electrolyte layer is 1 N/m or more.

**8.** The battery according to claim 2, wherein a peel strength between the negative electrode layer and the electrolyte layer is 1 N/m or more.

**9.** A composite membrane comprising:

a fiber substrate or a porous substrate; and
a polymer having an ability to preferentially conduct metal ions.

*Fig.1*

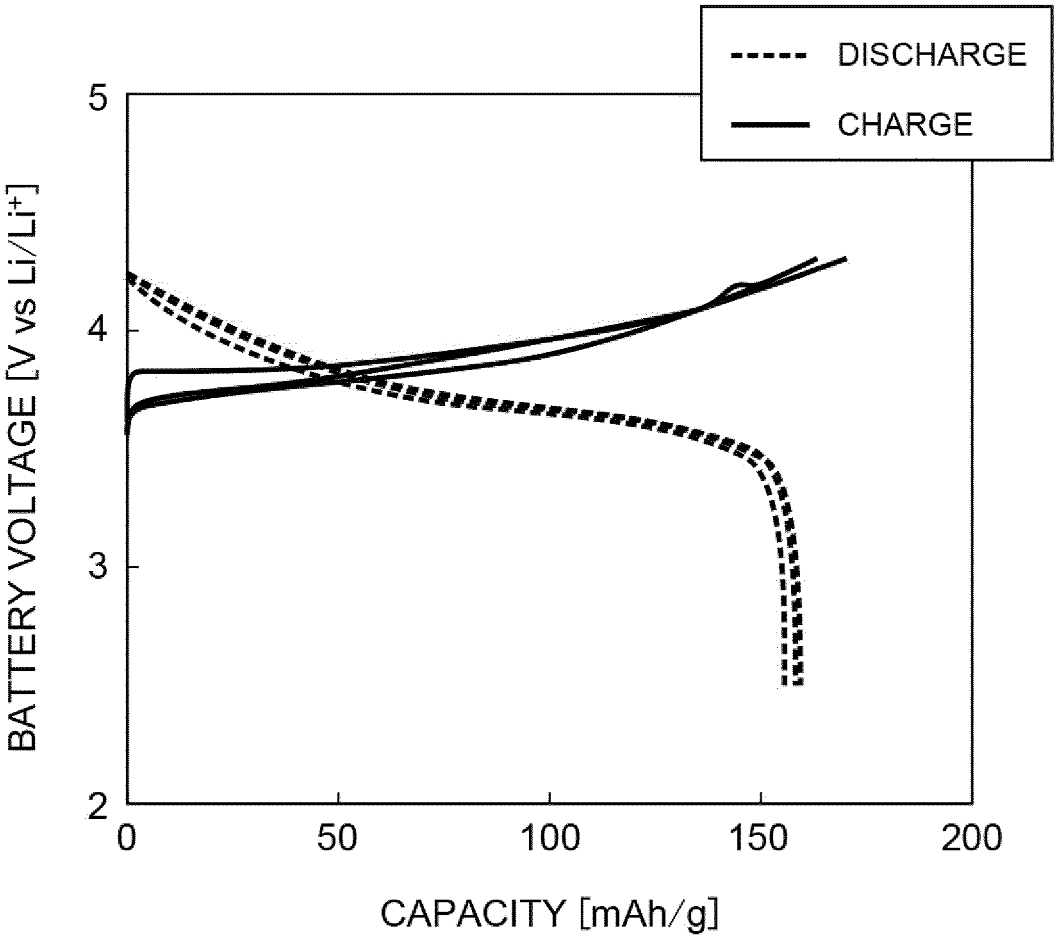
DISCHARGE
CHARGE
5
4
3
2
BATTERY VOLTAGE [V vs Li/Li+]
0
50
100
150
200
CAPACITY [mAh/g]

*Fig.2*

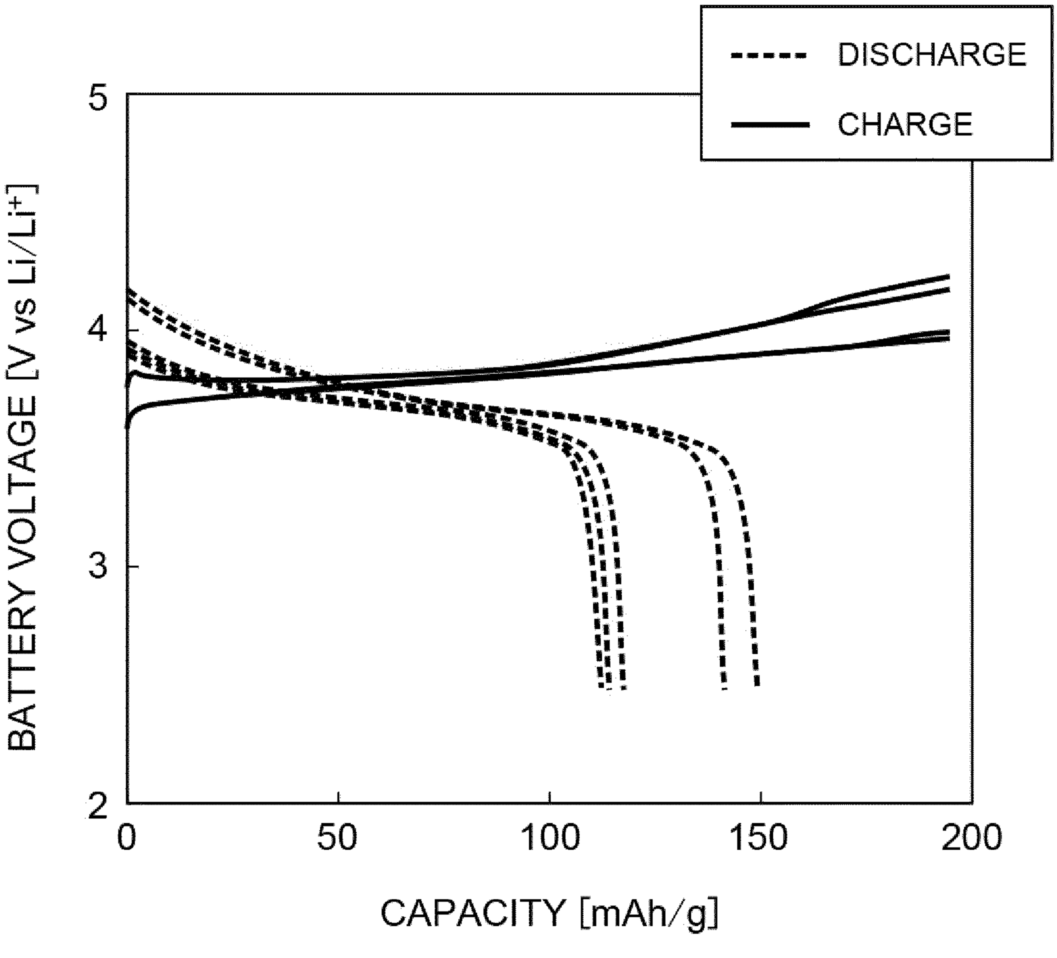
DISCHARGE
CHARGE
BATTERY VOLTAGE [V vs Li/Li+]
5
4
3
2
0
50
100
150
200
CAPACITY [mAh/g]

*Fig.3*

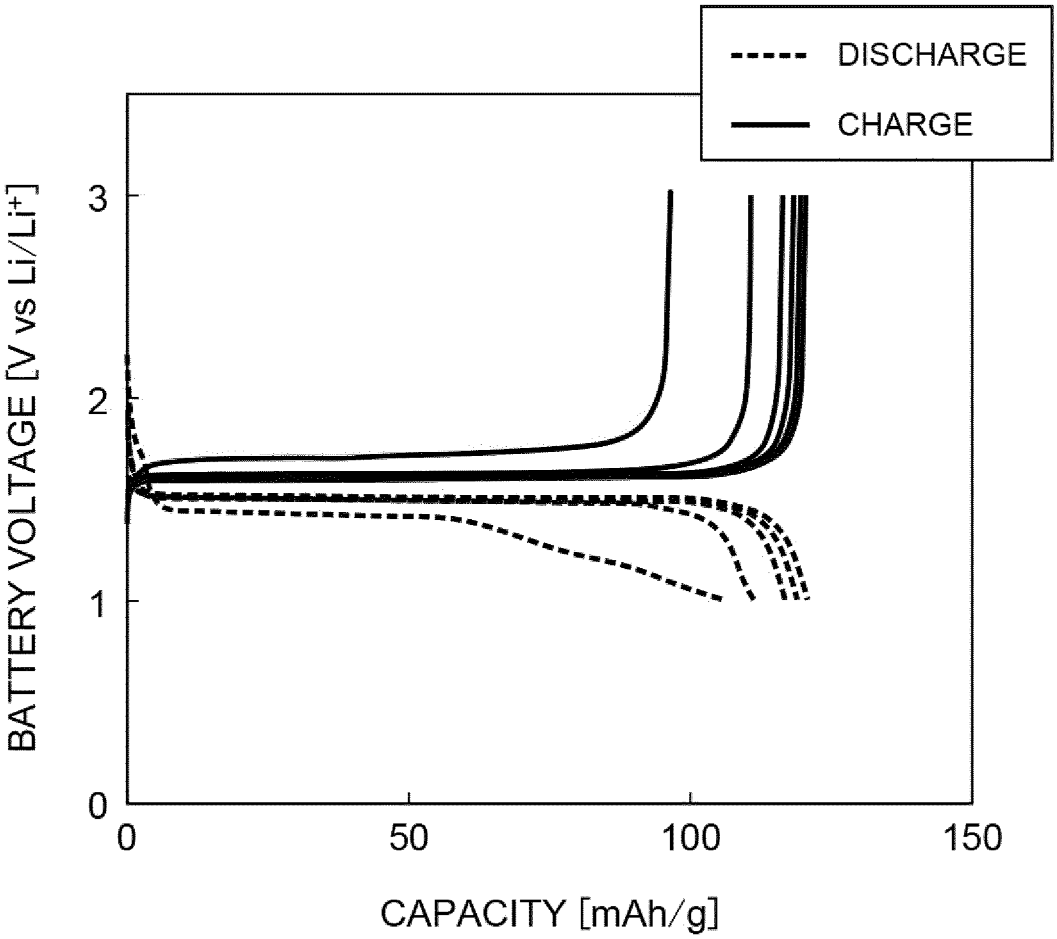
DISCHARGE
CHARGE
BATTERY VOLTAGE [V vs Li/Li+]
3
2
1
0
0
50
100
150
CAPACITY [mAh/g]

# Fig.4

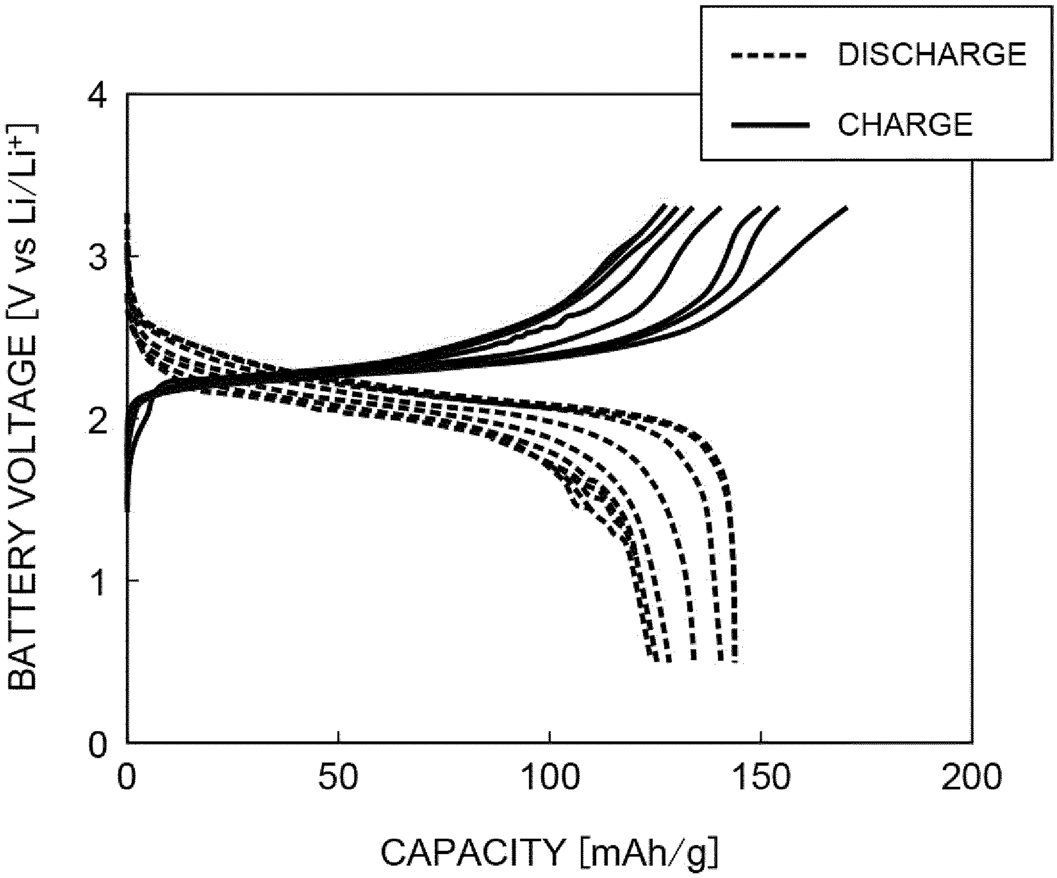
DISCHARGE
CHARGE
BATTERY VOLTAGE [V vs Li/Li+]
0
1
2
3
4
0
50
100
150
200
CAPACITY [mAh/g]

*Fig.5*

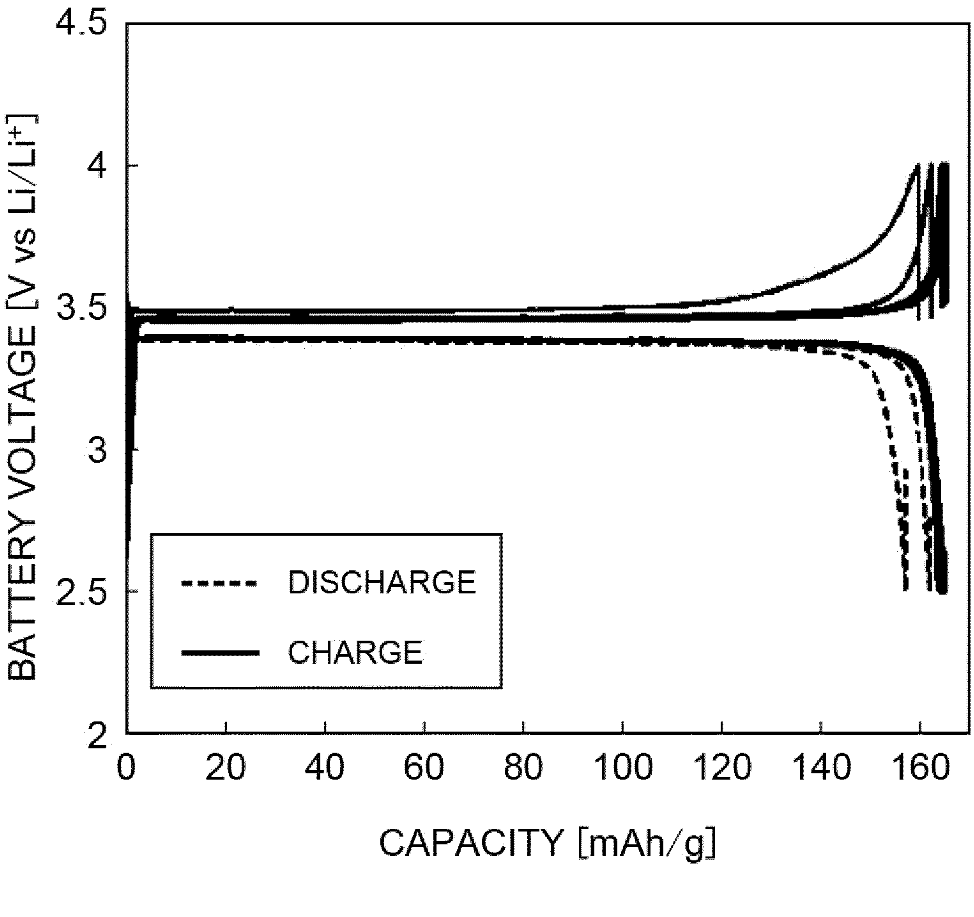
4.5
4
3.5
3
2.5
2
BATTERY VOLTAGE [V vs Li/Li+]
0
20
40
60
80
100
120
140
160
CAPACITY [mAh/g]
DISCHARGE
CHARGE

**INTERNATIONAL SEARCH REPORT**

International application No.
**PCT/JP2023/039724**

**A. CLASSIFICATION OF SUBJECT MATTER**

***H01M 10/0565***(2010.01)i; ***H01M 4/36***(2006.01)i; ***H01M 4/38***(2006.01)i; ***H01M 4/48***(2010.01)i; ***H01M 4/485***(2010.01)i; ***H01M 4/525***(2010.01)i; ***H01M 4/587***(2010.01)i; ***H01M 6/18***(2006.01)i; ***H01M 10/0568***(2010.01)i; ***H01M 10/0585***(2010.01)i; ***H01M 50/44***(2021.01)i; ***H01M 50/414***(2021.01)i; ***H01M 50/429***(2021.01)i; ***H01M 50/437***(2021.01)i

FI: H01M10/0565; H01M4/36 E; H01M4/38 Z; H01M4/48; H01M4/485; H01M4/525; H01M4/587; H01M6/18 E; H01M10/0568; H01M10/0585; H01M50/414; H01M50/429; H01M50/437; H01M50/44

According to International Patent Classification (IPC) or to both national classification and IPC

**B. FIELDS SEARCHED**

Minimum documentation searched (classification system followed by classification symbols)

H01M10/0565; H01M4/36; H01M4/38; H01M4/48; H01M4/485; H01M4/525; H01M4/587; H01M6/18; H01M10/0568; H01M10/0585; H01M50/414; H01M50/429; H01M50/437; H01M50/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-257480 A (FUJI PHOTO FILM CO LTD) 12 September 2003 (2003-09-12) paragraphs [0125]-[0127], [0135]-[0137], [0140], table 3 | 1-5, 7-9 |
| X | WO 2020/026702 A1 (NIPPON SHOKUBAI CO., LTD.) 06 February 2020 (2020-02-06) paragraphs [0085], [0097], [0123]-[0124], examples 1-3, 2-1, table 3 | 1, 3-5, 7-8 |
| X | JP 2002-216844 A (HITACHI LTD) 02 August 2002 (2002-08-02) paragraphs [0029], [0038], [0040]-[0042] | 1–5, 7–8 |
| X | JP 2011-081934 A (KONICA MINOLTA HOLDINGS INC) 21 April 2011 (2011-04-21) paragraphs [0075], [0079], [0098], [0101], [0104], [0111], [0124]-[0125], table 1 | 1-8 |
| X | WO 2007/086518 A1 (ZEON CORPORATION) 02 August 2007 (2007-08-02) paragraphs [0056], [0068], [0085], [0092]-[0093], example 1, table 1 | 1, 3-5, 7-8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2023/039724**

**C. DOCUMENTS CONSIDERED TO BE RELEVANT**

| Category* | Citation of document, with indication, where appropriate, of the relevant passages | Relevant to claim No. |
| --- | --- | --- |
| X | WO 2015/056385 A1 (SONY CORPORATION) 23 April 2015 (2015-04-23) paragraphs [0178]-[0183] | 9 |

Form PCT/ISA/210 (second sheet) (July 2022)

INTERNATIONAL SEARCH REPORT

International application No.
PCT/JP2023/039724

**Box No. III Observations where unity of invention is lacking (Continuation of item 3 of first sheet)**

This International Searching Authority found multiple inventions in this international application, as follows:

・STF was not found in claim 1, but STF was found in claims 7-8 referring to claim 1. Additionally, the invention in claim 2 is an invention in which the numerical range of the invention in claim 1 is optimized. Thus, the invention in claims 1 and 8 is classified as a main invention.

・The invention in claim 9 is the invention in which technical features with low technical relevance is added to the invention in claims 1-8 for determining the presence or absence of STF, and furthermore, since the specific problem that the invention is intended to solve, and that is ascertained from the added technical features, has little relevance thereto, the invention in claim 9 is classified as the second invention.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/JP2023/039724**

| Patent document cited in search report | Publication date (day/month/year) | Patent family member(s) | Publication date (day/month/year) |
|---|---|---|---|
| JP 2003-257480 A | 12 September 2003 | US 2003/0198870 A1<br>paragraphs [0188]-[0195], [0200]-[0211], [0215], table 3 | |
| WO 2020/026702 A1 | 06 February 2020 | US 2021/0296700 A1<br>paragraphs [0147], [0164], [0191]-[0192], examples 1-3, 2-1, table 3<br>EP 3817119 A1<br>CN 112470318 A<br>KR 10-2021-0032985 A | |
| JP 2002-216844 A | 02 August 2002 | (Family: none) | |
| JP 2011-081934 A | 21 April 2011 | (Family: none) | |
| WO 2007/086518 A1 | 02 August 2007 | (Family: none) | |
| WO 2015/056385 A1 | 23 April 2015 | US 2015/0311493 A1<br>paragraphs [0245]-[0253]<br>US 2017/0250391 A1<br>EP 3059793 A1<br>CA 2894233 A<br>KR 10-2016-0072070 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 110247111
- KR 102094466
- CN 112397762
- US 6022643 A
- US 5705689 A
- US 6120941 A
- JP 5476844 B


### Non-patent literature cited in the description


- *Polymer*, 1987, vol. 28, 2324